# FASCICULE DE BREVET EUROPEEN

(11) **EP 3 788 762 B1**
(45) Date de publication et mention de la délivrance du brevet: **28.05.2025**
(21) Numéro de dépôt: 19726062.3
(22) Date de dépôt: 24.04.2019
(51) Int. Cl.: H04L 69/08, H04L 67/288

(54) **PROCÉDÉ D'ENVOI D'UNE INFORMATION ET DE RÉCEPTION D'UNE INFORMATION POUR LA GESTION DE RÉPUTATION D'UNE RESSOURCE IP**
VERFAHREN ZUM SENDEN EINES INFORMATIONSELEMENTS UND ZUM EMPFANGEN EINES INFORMATIONSELEMENTS FÜR DIE REPUTATIONSVERWALTUNG EINER IP-RESSOURCE
METHOD FOR SENDING AN INFORMATION ITEM AND FOR RECEIVING AN INFORMATION ITEM FOR THE REPUTATION MANAGEMENT OF AN IP RESOURCE

(30) Priorité: 02.05.2018 FR 1800400
(43) Date de publication de la demande: 10.03.2021
(73) Titulaire: Orange, 92130 Issy-les-Moulineaux (FR)
(72) Inventeur: BOUCADAIR, Mohamed, 92326 CHÂTILLON CEDEX (FR); JACQUENET, Christian, 92326 CHÂTILLON CEDEX (FR)
(74) Mandataire: Cabinet Beau de Loménie
(86) Numéro de dépôt international: PCT/FR2019/050967
(87) Numéro de publication internationale: WO 2019/211548

(56) Documents cités:
- US-A1- 2010 057 895
- US-A1- 2014 143 825
- US-A1- 2016 261 707

## Description

### Arrière-plan de l'invention

L'invention se rapporte au domaine général des télécommunications.

Elle concerne plus particulièrement la gestion de ressources IP utilisées pour identifier des équipements composant un réseau ainsi que des équipements connectés à un tel réseau.

En particulier, la gestion de ressources IP peut impliquer la mise en œuvre d'un ou plusieurs systèmes de réputation de ressources IP chargés de prévenir la diffusion de trafic malveillant qui utiliserait l'une de ces ressources IP, par exemple.

Une ressource IP peut être une adresse IP ou un préfixe d'une adresse IP.

On rappelle qu'un système de réputation de ressources IP est un système qui conserve une trace reflétant la réputation des adresses ou préfixes IP en fonction de l'activité suspecte passée de machines ayant émis du trafic avec ces adresses utilisées comme adresses IP source. Pour ce faire, un tel système peut être composé d'un ou plusieurs serveurs, et héberger une base de données comportant une liste de ressources IP et des informations sur leur réputation. Un tel système peut divulguer, spontanément ou à la demande, un historique reflétant ladite activité.

Les ressources IP sont typiquement allouées par des fournisseurs de service ou des opérateurs réseau. Autrement, l'allocation des adresses ou préfixes IP peut être assurée par un fournisseur d'accès internet (FAI), un fournisseur de service, ou un opérateur.

Des fournisseurs de contenu peuvent se référer à un système de réputation pour décider de servir ou non une machine identifiée par au moins une adresse IP en fonction de l'historique reflétant l'activité de cette adresse IP et telle que maintenue par un système de réputation.

Un système de réputation peut être réduit à une base de données, telle qu'une liste noire, listant les adresses IP associées à des machines infectées par des virus ou ayant été à l'origine d'une activité illicite telle que l'envoi de courriel indésirable (SPAM), de trafic frauduleux, ou de trafic de déni de service DoS (pour « Denial of Service » en anglais).

Lorsqu'un système de réputation enregistre une adresse IP, associée à une première machine, en tant qu'une adresse ayant une mauvaise réputation, un fournisseur de contenu qui s'interface avec ce système de réputation peut décider d'engager une action relative à l'adresse IP utilisée par ladite première machine et qui tenterait d'accéder au contenu dudit fournisseur.

A titre d'exemple, l'action peut consister à bloquer tout ou partie des communications provenant de cette première machine, ou à rediriger ses communications vers un portail dédié.

Ainsi, si la même adresse IP est allouée ultérieurement à une deuxième machine, cette deuxième machine subira l'action engagée par le fournisseur de contenu, même si cette deuxième machine n'est pas infectée et n'a pas généré un trafic frauduleux. La qualité d'expérience de l'utilisateur de la deuxième machine est encore plus dégradée si cette adresse IP est inscrite sur plusieurs systèmes de réputation.

Le fournisseur de contenu peut appliquer un filtre sur l'adresse IP complète, codée sur 32 bits dans le cas d'une adresse IPv4, ou sur 128 bits dans le cas d'une adresse IPv6.

Le fournisseur de service ayant alloué l'adresse IP à la deuxième machine n'est pas au courant de l'expérience dégradée de son/sa client(e) propriétaire de la deuxième machine, dans la mesure où c'est le fournisseur de contenu qui a choisi d'exécuter une action de nature à bloquer le trafic en provenance de la deuxième machine; le fournisseur de service n'est donc pas en mesure d'anticiper une telle dégradation de service afin d'éviter que cela ne se reproduise pour d'autres client(e)s.

La situation peut se compliquer si plusieurs adresses sont allouées à la première machine infectée, toutes ces adresses sont alors polluées. On rappelle qu'un bloc d'adresses d'un fournisseur de service est dit « pollué » si plusieurs adresses de ce bloc sont présentes dans une liste noire consignée dans une base de données maintenue par un système de réputation.

Le document de l'état de la technique US2014143825 décrit un système de gestion de politiques, qui génère des règles basées, au moins en partie, sur des informations de réputation fournies par au moins une source de réputation et sur des informations d'événement client transmises par une logique de filtrage.

Un autre document antérieur US2010057895 décrit des procédés de fourniture d'informations de réputation pour un dispositif distant qui comprennent la réception d'un nom pour le dispositif distant à partir d'un dispositif client et dans lesquels, en réponse à la réception du nom pour le dispositif distant, le nom peut être traduit en une adresse de protocole Internet (IP) pour le dispositif distant, et des informations de réputation peuvent être fournies pour le dispositif distant.

Il existe donc un problème consistant à pouvoir bloquer des communications provenant d'un équipement connecté à un réseau sans affecter la qualité d'expérience perçue par l'utilisateur d'un autre équipement susceptible d'utiliser la même adresse IP source.

Ce problème se présente quel que soit le format d'adressage IPv4 ou IPv6.

Des problèmes supplémentaires apparaissent dans le cas d'un adressage IPv6. La structure d'une adresse IPv6 est décrite dans la RFC 4291.

Un filtrage effectué par le fournisseur de contenu sur la base de l'adresse IPv6 codée sur 128 bits peut être facilement contourné par un utilisateur malveillant. En effet, il suffit à un utilisateur malveillant de générer une nouvelle adresse IPv6 à partir d'un préfixe qui lui a été délégué par son fournisseur de service, par exemple en utilisant les ressources de l'algorithme défini dans le RFC 4941 et qui permet de générer de façon aléatoire la valeur des 64 bits de l'adresse qui forment l'identifiant d'interface IID (« Interface Identifier » en anglais).

On connait une solution permettant le blocage d'un équipement malveillant sans affecter la qualité d'expérience d'autres équipements, et qui consiste en ce que le fournisseur de contenu active un filtre sur la base du préfixe IPv6, et non pas de l'adresse IPv6 complète comme ci-dessus.

Cette solution présente l'inconvénient de sa difficulté d'implémentation. En effet, un fournisseur de contenu ne dispose pas d'informations fiables pour calculer d'une manière déterministe le préfixe IPv6 associé à une adresse IPv6.

Un paquet IPv6 ne révèle pas la taille du préfixe IPv6 alloué à une machine. Cette information n'est visible que du fournisseur de service qui a alloué le préfixe IPv6, et de la machine qui a reçu le préfixe du réseau de ce fournisseur. Or une même adresse IPv6 peut être obtenue en utilisant des préfixes de tailles différentes.

De plus, la taille des préfixes IPv6 alloués aux machines qui sont connectés au réseau de l'opérateur ou du fournisseur de service, par exemple à des équipements CPE (pour « Customer Premises Equipment » en anglais), relève d'une politique caractéristique du service de connectivité IPv6 fourni par chaque fournisseur d'accès : il n'existe pas de taille standard ou imposée pour les préfixes IPv6 alloués par ces fournisseurs aux clients.

En outre, la taille de ces préfixes peut également varier selon le service fourni par un opérateur : par exemple, un service de connectivité IPv6 fourni à une entreprise peut reposer sur l'allocation d'un préfixe de taille /48 (dite aussi de longueur /48), c'est-à-dire un préfixe d'une longueur de 48 bits, tandis que le service de connectivité IPv6 fourni à un client résidentiel peut reposer sur l'allocation d'un préfixe de longueur /56, c'est-à-dire d'une longueur de 56 bits.

Il existe donc un besoin d'une solution permettant une meilleure identification de la taille du préfixe alloué à une machine, et qui ne présente pas les inconvénients des solutions existantes.

### Objet et résumé de l'invention

L'invention vise un procédé d'envoi d'une information permettant une gestion de réputation de ressources IP dans un ensemble de réseaux comprenant au moins un premier réseau et un deuxième réseau. Le procédé étant mis en œuvre par un dispositif du premier réseau, dit « dispositif émetteur », il est caractérisé en ce qu'il comporte une étape d'envoi, par le dispositif émetteur à destination d'un dispositif du deuxième réseau, dit « dispositif récepteur », d'une information représentative d'une taille de préfixe d'une adresse IP affectée à un équipement connecté au premier réseau.

Dans un mode de réalisation, l'information représentative de la taille de préfixe envoyée est utilisée pour la gestion de réputation de ressources IP mise en œuvre dans l'ensemble de réseaux.

Les caractéristiques et avantages du procédé d'envoi d'une information selon l'invention présentés ci-après s'appliquent de la même façon au procédé de réception d'une information, au dispositif émetteur et au dispositif récepteur selon l'invention.

Au sens de l'invention, l'adresse IP affectée à l'équipement connecté au premier réseau peut être une adresse allouée directement à l'équipement ou utilisée par un mécanisme de traduction d'adresses ou de préfixes.

Dans un mode de réalisation, l'adresse (ou le préfixe) IP est allouée par une passerelle résidentielle, par un équipement CPE ou par un décodeur STB (pour « Set Top Box » en anglais).

Dans un autre mode, l'adresse IP est attribuée par un mécanisme de traduction d'adresses de type NAT (pour "Network Address Translation" en anglais) ou de type NPTv6 (pour "IPv6 Network Prefix Translation" en anglais).

Les premier et deuxième réseaux peuvent être exploités par un même opérateur ou par des opérateurs différents.

Dans un mode de réalisation, le premier ou le deuxième réseau est un réseau local, par exemple un réseau domestique ou un réseau d'entreprise.

Dans un mode de réalisation, le premier ou le deuxième réseau est un réseau hébergeur de contenu.

Le premier et le deuxième réseau peuvent être exploités par des entités distinctes.

Dans un mode de réalisation, le premier et le deuxième réseau sont des systèmes autonomes.

On rappelle qu'un système autonome AS (pour « Autonomous System » en anglais) est un ensemble de routeurs IP placés sous la responsabilité d'exploitation d'une seule entité administrative, typiquement un opérateur de réseau IP ou un fournisseur de services IP.

Dans un mode de réalisation, l'information représentative de la taille du préfixe est la taille à proprement parler. Dans un autre mode, cette information est obtenue par un traitement effectué sur la taille, par exemple un condensé (« Hash », en anglais). Ce condensé ainsi qu'un contrôle d'intégrité sont utilisés dans certains modes de réalisation pour éviter une insertion frauduleuse d'informations d'identification.

Connaissant la taille de préfixe de l'adresse IP affectée à l'équipement, cet équipement peut être identifié sans ambiguïté.

Grâce à l'invention, il est possible d'exécuter une action à l'encontre d'un équipement malveillant sans affecter la qualité d'expérience d'un autre équipement connecté au réseau.

Dans un mode de réalisation, l'adresse IP est une adresse IPv4 ou une adresse IPv6.

Dans un mode de réalisation, le procédé d'envoi d'une information comporte en outre une étape d'envoi, par le dispositif émetteur à destination du dispositif récepteur, d'une information représentative d'une durée d'attribution du préfixe.

Une action définie à l'encontre d'un équipement malveillant peut être exécutée si l'adresse affectée à l'équipement continue de figurer dans une liste noire maintenue par un système de réputation de ressources IP. Ladite action peut consister, par exemple, à mettre en place un filtre dont la durée de validité est en adéquation avec la durée d'attribution du préfixe. Plus précisément, le filtre sera valide aussi longtemps que l'adresse figure dans une liste noire.

Dans un mode de réalisation, le procédé d'envoi d'une information comporte en outre une étape d'envoi, par le dispositif émetteur à destination du dispositif récepteur, d'une information représentative d'un identifiant d'un serveur de réputation de ressources IP du premier réseau, le serveur étant configuré pour gérer au moins une liste de ressources IP associées à des équipements connectés au premier réseau.

Ainsi, une éventuelle action définie à l'encontre de l'équipement peut être notifiée par le système de réputation à l'entité opératrice du réseau auprès de laquelle l'équipement a obtenu son adresse IP. Il est alors possible d'éviter une dégradation de service au sein du premier réseau en évitant d'attribuer une ressource IP identique à celle de l'équipement concerné par l'action, à un autre équipement.

Dans un mode de réalisation, lesdits dispositifs émetteur et récepteur sont des routeurs communiquant selon l'un des protocoles BGP (Border Gateway Protocol) ou BGPSEC (Border Gateway Protocol Security), et construisent une table comportant au moins une information représentative de la taille de préfixe d'une adresse IP.

Corrélativement, l'invention vise un dispositif d'un premier réseau, dit « dispositif émetteur », le premier réseau étant capable de joindre un deuxième réseau, le dispositif émetteur étant caractérisé en ce qu'il est configuré pour envoyer, à destination d'un dispositif du deuxième réseau, une information représentative d'une taille de préfixe d'une adresse IP affectée à un équipement connecté au premier réseau.

Le dispositif émetteur selon l'invention peut mettre en œuvre le procédé d'envoi d'une information conforme à l'invention.

Dans un mode de réalisation, le dispositif émetteur est un serveur ou un équipement réseau, par exemple un routeur.

Corrélativement, l'invention vise un procédé de réception d'une information permettant une gestion de réputation de ressources IP dans un ensemble de réseaux comprenant au moins un premier réseau et un deuxième réseau et mettant en œuvre une gestion de réputation de ressources IP, le procédé étant mis en œuvre par un dispositif de l'ensemble de réseaux, dit « dispositif récepteur », et caractérisé en ce qu'il comporte les étapes de :
- obtention d'une information représentative d'une taille de préfixe d'une adresse IP affectée à un équipement connecté au premier réseau ; et
- exécution d'une action définie en fonction de la taille.

Dans un mode de réalisation, le premier et le deuxième réseau sont exploités par deux entités distinctes.

Dans un mode de réalisation, l'action est au moins une action parmi :
- un ajout d'une ressource IP associée à l'équipement dans une liste noire ou une liste blanche, ladite ressource IP étant le préfixe ou l'adresse IP ;
- un retrait de la ressource IP associée à l'équipement d'une liste noire ou d'une liste blanche ;
- une limitation de trafic échangé avec l'équipement;
- une redirection des communications impliquant la ressource IP associée à l'équipement vers un portail dédié ; et
- une mise à jour d'une table de routage ou de réputation de ressources IP.

Dans un mode de réalisation, le procédé de réception d'une information comporte en outre, suite à l'étape d'exécution d'une action, une étape d'annulation d'un effet de l'action, cette étape d'annulation étant déclenchée sur expiration d'une durée de vie de l'action ou sur réception d'une requête de la part d'un dispositif configuré pour une gestion de réputation de ressources IP.

Dans un mode de réalisation, l'étape d'annulation d'un effet de l'action est précédée par des étapes de demande et de réception d'au moins une information complémentaire de la part du dispositif configuré pour une gestion de réputation de ressources IP.

Ladite information complémentaire peut être utile pour vérifier l'authenticité de l'information représentative de la taille.

Dans un mode de réalisation, le dispositif récepteur obtient en outre au moins une information parmi :
- l'adresse IP de l'équipement ;
- une information représentative d'une durée d'attribution du préfixe ;
- un identifiant d'un serveur de réputation de ressources IP du premier réseau, le serveur étant configuré pour gérer au moins une liste de ressources IP associées à des équipements connectés au premier réseau ;
- un code d'identification d'une action déjà effectuée par un autre dispositif ;
- une raison de l'action déjà effectuée par un autre dispositif ;
- une liste de ressources IP associées à un filtre ; et
- une information d'horodatage sur l'affectation de l'adresse IP de l'équipement.

L'obtention de la liste de ressources IP associées à un filtre peut servir pour mettre à jour une table de routage ou une table relative à un système de réputation de ressources IP. Le filtre peut exploiter une adresse IP, un préfixe, et/ou un identifiant d'un réseau.

Corrélativement, l'invention vise un dispositif d'un ensemble de réseaux, dit « dispositif récepteur », ledit ensemble de réseaux comprenant au moins un premier réseau et un deuxième réseau, le dispositif récepteur étant caractérisé en ce qu'il est configuré pour :
- obtenir une information représentative d'une taille de préfixe d'une adresse IP affectée à un équipement connecté au premier réseau ; et
- exécuter une action définie en fonction de la taille dudit préfixe.

Le dispositif récepteur selon l'invention peut mettre en œuvre le procédé de réception d'une information conforme à l'invention.

Le dispositif récepteur conforme à l'invention obtient l'information représentative de la taille du préfixe, cette information ayant été envoyée par le dispositif émetteur conforme à l'invention.

Dans un mode de réalisation, le dispositif récepteur est un équipement réseau du deuxième réseau, ou un serveur d'un système de réputation de ressources IP de l'ensemble des réseaux, ou un serveur de réputation de ressources IP du premier réseau.

L'invention vise également un premier programme d'ordinateur sur un support d'enregistrement, ce programme étant susceptible d'être mis en œuvre dans un dispositif, dit « dispositif émetteur », tel qu'un serveur ou un équipement réseau. Ce programme comporte des instructions adaptées à la mise en œuvre d'un procédé d'envoi d'une information tel que décrit ci-dessus.

L'invention vise également un deuxième programme d'ordinateur sur un support d'enregistrement, ce programme étant susceptible d'être mis en œuvre dans un dispositif dit « dispositif récepteur », tel qu'un serveur ou un équipement réseau. Ce deuxième programme comporte des instructions adaptées à la mise en œuvre d'un procédé de réception d'une information tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi des supports d'information ou d'enregistrement lisibles par un ordinateur, et comportant des instructions des programmes d'ordinateur tels que mentionnés ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens. Les programmes selon l'invention peuvent être en particulier téléchargés sur un réseau de type Internet.

Alternativement, chaque support d'informations ou d'enregistrement peut être un circuit intégré dans lequel un des programmes est incorporé, le circuit étant adapté pour exécuter ou pour être utilisé dans l'exécution de la méthode en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 illustre un réseau dans lequel un procédé d'envoi d'une information et un procédé de réception d'une information conformes à l'invention peuvent être mis en œuvre dans un mode particulier de réalisation ;
- la figure 2 est un chronogramme représentant les étapes d'un procédé d'envoi d'une information et un procédé de réception d'une information dans un réseau activant le protocole BGPSEC conformément à un premier mode de réalisation de l'invention ;
- la figure 3 est un chronogramme représentant les étapes d'un procédé d'envoi d'une information et un procédé de réception d'une information dans un réseau apte à mettre en œuvre une communication TCP, conformément à un deuxième mode de réalisation de l'invention ;
- la figure 4 illustre un deuxième réseau dans lequel un procédé d'envoi d'une information et un procédé de réception d'une information conformes à l'invention peuvent être mis en œuvre dans un mode particulier de réalisation ;
- la figure 5 est un chronogramme représentant des étapes d'une variante du procédé de réception d'une information conforme à un mode de réalisation de l'invention ;
- la figure 6 est un chronogramme représentant des étapes d'une variante du procédé d'envoi d'une information conforme à un mode de réalisation de l'invention ;
- la figure 7 illustre l'architecture fonctionnelle d'un dit « dispositif récepteur » conforme à l'invention selon un mode de réalisation;
- la figure 8 illustre l'architecture matérielle d'un routeur conforme à l'invention selon un mode de réalisation; et
- la figure 9 illustre l'architecture matérielle d'un dit « dispositif récepteur » conforme à l'invention selon un mode de réalisation.

### Description détaillée

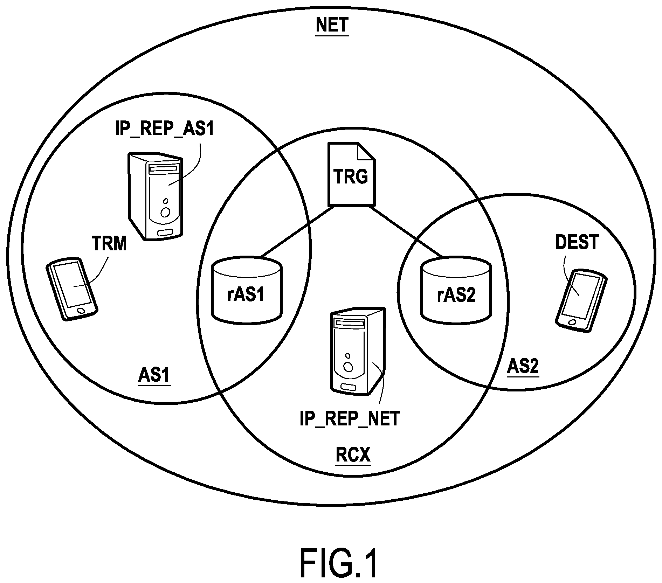

La **figure 1** représente un ensemble de réseaux NET dans lequel un procédé d'envoi et un procédé de réception d'une information, conformes à l'invention, sont mis en œuvre, ladite information pouvant être avantageusement utilisée pour une gestion de réputation de ressources IP.

Dans ce mode de réalisation, l'ensemble de réseaux NET est géré par plusieurs opérateurs : l'ensemble de réseaux NET comporte un premier réseau AS1 géré par un premier opérateur OP1 et un deuxième réseau AS2 géré par un deuxième opérateur OP2. Le premier réseau AS1 et le deuxième réseau AS2 sont connectés entre eux via un réseau d'interconnexion RCX, par exemple l'Internet.

Dans ce mode de réalisation, les communications entre les deux réseaux AS1 et AS2 passent par au moins un nœud intermédiaire. Chaque réseau AS1, AS2, comporte au moins un routeur d'interconnexion rAS1, rAS2.

L'ensemble de réseaux NET comporte une table de routage globale TRG gérée par les routeurs d'interconnexion rAS1 et rAS2.

On rappelle qu'une table de routage TRG maintient l'ensemble des routes connues et disponibles et telles qu'annoncées par les routeurs du premier et du deuxième réseau.

La table de routage TRG peut comporter pour chaque réseau AS1, AS2, une liste de préfixes annoncés par ce réseau AS1, AS2.

Selon ce mode de réalisation, la table de routage TRG comporte en plus, pour chaque réseau AS1, AS2, au moins une information descriptive d'au moins une taille de préfixe tel qu'alloué à au moins un équipement connecté à ce réseau AS1, AS2.

Un équipement TRM est connecté au premier réseau AS1. Son adresse IP associée au sein du premier réseau AS1 est dérivée d'un préfixe de taille T.

Le routeur rAS1 est configuré pour envoyer cette taille T à destination d'un dispositif récepteur du deuxième réseau AS2, par exemple le routeur rAS2 ou un serveur de contenu DEST.

L'ensemble des réseaux NET comporte au moins un dispositif, appelé ci-après « système de réputation réseau » et noté IP_REP_NET, permettant la mise en œuvre d'une politique de réputation des ressources IP au sein du réseau NET.

Le système de réputation IP_REP_NET comporte un ou plusieurs serveurs. Un seul serveur est présenté sur la figure 1.

Le système de réputation IP_REP_NET héberge une base de données qui comporte une liste de ressources IP attribuées au sein du réseau NET et des informations sur la réputation de ces ressources IP. On rappelle qu'une ressource IP peut être un préfixe ou une adresse IP.

Dans ce mode de réalisation, la base de données hébergée par le système de réputation de ressources IP du réseau NET, IP_REP_NET, est une liste dite « liste noire » qui enregistre des ressources IP identifiées comme des adresses IP sources de machines connectées au réseau NET, mais infectées par des virus ou ayant généré des activités illicites comme l'envoi de spams ou ayant été impliquées dans la mise en œuvre d'une attaque, par exemple de type DoS (Denial of Service), à destination d'une ou plusieurs autres machines cibles.

Nous désignons par machine connectée au réseau NET, un équipement réseau, tel qu'un commutateur ou un routeur, ou un équipement utilisateur tel qu'un terminal téléphonique, une tablette ou un ordinateur.

Dans ce mode de réalisation, le premier réseau AS1 comporte un dispositif réseau, appelé ci-après serveur de réputation de ressources IP du premier réseau AS1 et noté IP_REP_AS1, configuré pour la gestion de la réputation des ressources IP associées à des équipements connectés au premier réseau AS1.

Le serveur de réputation IP_REP_AS1 reçoit et gère des notifications relatives à la réputation de ressources IP associées à des équipements connectés au premier réseau AS1. Il est aussi responsable de contacter les systèmes de réputation pour récupérer la liste des ressources dont il a la responsabilité.

Le deuxième réseau AS2 peut aussi comporter un serveur de réputation configuré pour gérer la réputation de ressources IP du deuxième réseau AS2.

Le serveur IP_REP_AS1 est identifié par un identifiant, tel qu'une adresse IP, une adresse e-mail, une URI ou un nom de domaine, par exemple selon le formalisme DNS (Domain Name System).

Dans ce mode de réalisation, le serveur de réputation IP_REP_AS1 est configuré pour recevoir ou envoyer des messages provenant ou à destination du système de réputation réseau IP_REP_NET ou d'autres serveurs de réputation d'autres réseaux.

Le système de réputation réseau IP_REP_NET est configuré pour recevoir des demandes provenant des serveurs de réputation compris dans le réseau NET, par exemple le serveur IP_REP_AS1, pour exécuter certaines actions telles que le retrait d'une ressource IP d'une liste noire.

Dans ce mode de réalisation, au moins un serveur du système IP_REP_NET de réputation de ressources IP de l'ensemble des réseaux NET est aussi configuré pour envoyer aux serveurs de réputation de ressources IP associées au sein d'un réseau de l'ensemble NET, par exemple IP_REP_AS1, sur consultation ou suite à une modification du contenu de sa propre base de données, des messages d'information sur sa base de données.

Dans ce mode de réalisation, un équipement réseau DEST est connecté au réseau NET via le deuxième réseau AS2. L'équipement DEST possède alors une adresse IP source attribuée par l'opérateur OP2. Dans ce mode de réalisation, l'équipement DEST est un serveur de contenu, par exemple un serveur qui héberge un site web, ou une base de données.

Chacune des adresses IP du premier équipement TRM et du serveur DEST peut être une adresse IPv4 ou une adresse IPv6.

Par la suite, et à titre d'exemples, nous décrivons des modes de réalisation où les procédés de l'invention sont mis en œuvre dans un réseau IP activant le protocole BGPSEC ou le protocole BGP et apte notamment à mettre en œuvre des communications IP.

### Mise en œuvre des procédés de l'invention dans un réseau activant le protocole BGPSEC

Dans un mode de réalisation, le procédé d'envoi d'une information et le procédé de réception d'une information, conformes à l'invention et permettant la gestion de réputation de ressources IP, sont mis en œuvre dans un réseau utilisant le protocole BGPSEC.

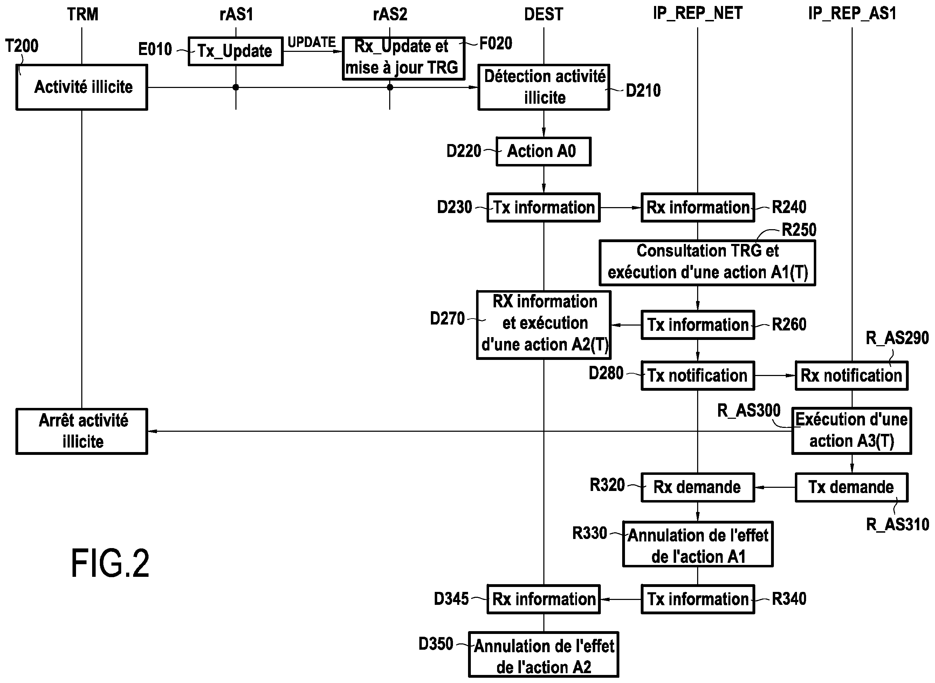

La **figure 2** est un exemple de chronogramme représentant des étapes des procédés de l'invention conformes à ce mode de réalisation. L'ordre des étapes est fourni à titre d'exemple. Particulièrement, certaines étapes peuvent être déclenchées selon un autre ordre que celui de la figure 2. A noter également que certaines étapes ne sont pas interdépendantes. Par exemple, l'étape R_AS310 peut être déclenchée à l'initiative d'un serveur de réputation IP_REP_AS indépendamment de la réception d'une notification de la part d'un système de réputation IP_REP_NET.

Le procédé d'envoi d'une information est mis en œuvre par le routeur rAS1, en référence à l'étape E010 décrite ultérieurement.

Le procédé de réception d'une information est mis en œuvre par le routeur rAS2, en référence à l'étape F020 décrite ultérieurement.

Le procédé de réception d'une information est mis en œuvre par le serveur de contenu DEST, en référence à l'étape D270 décrite ultérieurement.

Le procédé de réception d'une information est mis en œuvre par au moins un serveur du système de réputation réseau IP_REP_NET, en référence aux étapes R240, R250, R320 et R330 décrites ultérieurement.

Le procédé de réception d'une information est mis en œuvre par le serveur IP_REP_AS1 de réputation IP du premier réseau AS1, en référence aux étapes R_AS290 et R_AS300 décrites ultérieurement.

Sur la figure 2, on a représenté différentes étapes mises en œuvre dans cet exemple par le premier équipement TRM, le routeur rAS1, le routeur rAS2, le serveur DEST, un serveur du système de réputation IP_REP_NET et le serveur de réputation IP_REP_AS1.

Dans ce mode de réalisation, la politique de routage mise en place au sein du réseau NET repose en particulier sur l'activation du protocole BGPSEC.

Dans ce mode de réalisation, les premier et deuxième réseaux AS1 et AS2 sont des systèmes autonomes.

On rappelle que le protocole BGPSEC est une version sécurisée du protocole BGP. Les deux protocoles BGP et BGPSEC permettent d'annoncer des routes entre les différents systèmes autonomes (AS) qui composent un réseau, par exemple le réseau Internet. Les différents routeurs du réseau échangent des messages UPDATE pour annoncer ces routes.

On rappelle qu'un message UPDATE conforme au protocole BGP ou au protocole BGPSEC comporte au moins un attribut obligatoire nommé « AS_PATH », qui identifie le ou les systèmes autonomes qu'emprunte une route annoncée dans le message UPDATE pour atteindre un ou plusieurs réseaux identifiés par leur préfixe.

On rappelle qu'un message UPDATE du protocole BGPSEC comporte en plus un attribut optionnel, appelé « BGPSEC_PATH ». Cet attribut contient les informations contenues dans l'attribut AS_PATH : une liste de systèmes autonomes, ainsi qu'une liste de signatures générées par des routeurs des systèmes autonomes listés dans l'attribut AS_PATH.

Contrairement au protocole BGP, le protocole BGPSEC permet de vérifier l'intégrité d'une annonce de route. En effet, la propagation d'une annonce de route par le protocole BGPSEC à travers différents AS suppose la mise en place d'une signature numérique correspondant à chaque AS traversé. Ces signatures sont ajoutées dans l'attribut BGPSEC_PATH du message UPDATE.

Dans ce mode de réalisation, les routeurs rAS1 et rAS2 sont des routeurs de frontière ASBR (pour « Autonomous System Border Router » en anglais) des systèmes autonomes AS1 et AS2. Les routeurs rAS1 et rAS2 sont connectés entre eux et communiquent selon le protocole BGPSEC.

Au cours d'une étape E010, le routeur rAS1 envoie un message UPDATE au routeur rAS2. Concrètement, le routeur rAS1 insère l'attribut BGPSEC_PATH dans le message UPDATE. L'attribut BGPSEC_PATH contient alors une seule signature destinée à garantir l'intégrité de l'annonce et comporte une information sur:
- l'attribut NLRI (pour « Network Layer Reachability Information » en anglais) décrivant les préfixes atteints par les routes annoncées dans le message UPDATE, conformément à l'état de la technique;
- le numéro « 1 » de l'AS émetteur du message UPDATE, AS1, conformément à l'état de la technique ;
- le numéro « 2 » de l'AS destinataire, AS2, conformément à l'état de la technique ; et
- conformément au procédé d'identification selon la présente invention, la taille T du préfixe associé aux adresses IP affectées à des équipements connectés à l'ensemble de réseaux NET via le premier système autonome AS1, et dont les routes sont annoncées au deuxième système autonome AS2 via le message UPDATE.

Nous notons que la taille T est celle d'un préfixe associée à des adresses IP affectées à des équipements connectés au premier système autonome AS1. Cette taille n'est pas celle d'un préfixe décrit dans le champ NLRI d'un message UPDATE.

Par exemple, un champ NLRI décrit un préfixe IPv6 d'une longueur de 32 bits. Le routeur rAS1 annonce ainsi le préfixe IPv6 de longueur /32 conformément à l'état de la technique mais aussi une information représentative de la taille /56 des préfixes délégués aux équipements clients connectés au système autonome AS1, et qui sont extraits du préfixe /32. Cette annonce indique que ce routeur est capable de joindre n'importe quelle adresse du préfixe 2001:db8::/32 et que les machines connectées au réseau de cet ASBR sont identifiées par des adresses dérivées des préfixes de taille 56.

Pour une adresse IPv6, la taille T du préfixe IPv6 associé a typiquement une valeur comprise entre 0 et 64. Cependant, des valeurs supérieures à 64 peuvent être envisagées. Un seul attribut descriptif de la taille T est associé à un préfixe IPv6 tel qu'annoncé par un message UPDATE utilisé par le protocole BGPSEC ou le protocole BGP.

L'attribut de taille T des préfixes est utilisé pour déterminer la taille du préfixe auquel est associée une adresse IP.

Dans ce mode de réalisation, au cours de l'étape E010, le routeur rAS1 ajoute aussi, à la signature du message UPDATE, un attribut qui représente une durée D d'allocation des préfixes IP au sein du premier système autonome AS1, y compris le préfixe alloué au premier équipement TRM.

Une valeur « infinie » peut être utilisée pour indiquer une allocation permanente du préfixe.

Un seul attribut descriptif de la durée d'allocation D est associé à un préfixe IPv6 annoncé par un message UPDATE utilisé par le protocole BGPSEC ou le protocole BGP.

Dans ce mode de réalisation, au cours de l'étape E010, le routeur rAS1 ajoute aussi, à la signature du message UPDATE, un attribut représentant un identifiant du serveur de réputation IP_REP_AS1.

Au cours d'une étape F020 et conformément au procédé de réception d'une information selon la présente invention, le routeur rAS2 reçoit le message UPDATE du routeur rAS1. A partir de ce message, le routeur rAS2 extrait l'information sur la taille T de préfixe attribuée par l'opérateur OP1, et éventuellement la durée D et l'identifiant du serveur IP_REP_AS1, et met à jour la table de routage TRG.

Le routeur destinataire rAS2 est configuré pour propager le message UPDATE, en ajoutant une nouvelle signature à l'attribut BGPSEC_PATH. Ce message sera envoyé à des routeurs ASBR des AS auxquels AS2 est connecté. La nouvelle signature garantit l'intégrité du contenu du message UPDATE qui avait fait l'objet d'une première signature numérique par le routeur rAS1.

Cette procédure est réitérée d'un système autonome à un autre. Cette phase de dissémination permet d'annoncer les informations de taille T de préfixe, de durée D de délégation des ressources IP, et de l'identifiant du serveur IP_REP_AS1 par le système AS1 aux autres systèmes autonomes composant l'ensemble des réseaux NET.

Dans ce mode de réalisation, ces informations sont maintenues dans la table de routage globale TRG qui consigne l'ensemble des routes disponibles sur l'ensemble de réseaux NET.

L'utilisation du protocole BGPSEC permet de construire une table TRG pour l'ensemble de réseaux NET qui maintient des enregistrements structurés, par exemple de la manière suivante :
- un préfixe alloué au sein du réseau NET, par exemple un préfixe de type IPv6, tel que 2001:db::/32 ;
- un numéro de système autonome AS ayant alloué des adresses IP d'un bloc relevant de ce préfixe;
- une taille T des préfixes dérivés de ce préfixe, de longueur /32 dans cet exemple ; et
- une durée D de validité des adresses ou préfixes dérivés de ce préfixe, de longueur /32 dans cet exemple, et alloués aux différents équipements connectés au premier réseau AS1.

On suppose que l'utilisateur de l'équipement TRM veut accéder au contenu du serveur DEST du deuxième système autonome AS2. Selon la table de routage TRG, la route entre l'équipement TRM et le dispositif récepteur DEST passe par les routeurs rAS1 et rAS2.

Au cours d'une étape T200, l'équipement TRM génère une activité illicite, non conforme à la charte d'usage du service offert par le serveur DEST, par exemple une attaque du serveur de contenu DEST ou un envoi de spams à destination du serveur DEST.

Le serveur DEST détecte l'activité illicite au cours d'une étape D210.

Le serveur DEST identifie et exécute, au cours d'une étape optionnelle D220, une action A0 à l'encontre de l'équipement TRM.

Cette action A0 peut consister à rajouter la ou les adresses IP associées à l'équipement TRM dans une liste noire, ou à limiter le trafic reçu ou à destination de l'équipement TRM, ou encore à rediriger les communications de l'équipement TRM vers un portail dédié.

Au cours d'une étape D230, le serveur DEST envoie un message au système de réputation de ressources IP du réseau, IP_REP_NET, pour l'informer de la détection de l'activité illicite. Le message comporte la ou les adresses IP de l'équipement TRM. Au moins un serveur du système IP_REP_NET reçoit ce message au cours d'une étape R240.

Au cours d'une étape R250 conforme au procédé de réception d'une information, le système de réputation IP_REP_NET consulte la table TRG en fournissant l'adresse IP de l'équipement TRM et obtient des informations sur cette adresse, telles que, la taille T de son préfixe, la durée D de son allocation et l'identifiant IP_REP_AS1 du serveur de réputation du premier système AS1.

Au moins un serveur du système IP_REP_NET définit ainsi une action A1(T) en fonction de la taille T et exécute ladite action A1. Cette action A1 est la mise à jour de sa base de données, par exemple en ajoutant le préfixe de taille T de l'adresse IP de l'équipement TRM à sa liste noire.

Au cours d'une étape R260, le serveur faisant partie du système de réputation IP_REP_NET transmet les informations récupérées de la table de routage TRG concernant le préfixe de taille T au serveur de contenu DEST.

Le serveur DEST reçoit ces informations au cours d'une étape D270.

Connaissant la taille T de préfixe de l'adresse IP allouée par l'opérateur OP1, le serveur DEST définit une action A2(T) en fonction de la taille T et l'exécute vis-à-vis de l'équipement TRM. Par exemple, si la recherche d'information (étape R250) retourne la taille de préfixe 56 pour l'adresse IPv6 « 2001:db8::1/128 » de l'équipement TRM, alors l'action A2 doit prendre comme argument d'entrée : « 2001:db8::1/56 ». L'information représentative de la taille T permet d'appliquer d'une manière déterministe l'action requise pour restreindre l'accès de l'équipement TRM.

L'action A2 annule l'effet de l'action A0 exécutée auparavant au cours de l'étape D220.

Le serveur DEST applique par exemple un filtre exploitant la taille T et exploitant l'adresse IP de l'équipement TRM.

Selon l'exemple précédent où la ressource IP de l'équipement TRM est une adresse IPv6 dont la taille de préfixe T est de 56 bits, le serveur DEST applique un filtre sur toutes les adresses IP sources ayant comme 56 premiers bits, des bits identiques aux premiers 56 bits de l'adresse IPv6 de de l'équipement TRM.

Grâce à l'invention, un utilisateur malveillant de l'équipement TRM ne pourrait pas générer une autre adresse IPv6 pour contourner le filtre appliqué par le serveur DEST car tout le bloc d'adresses partageant le même préfixe est filtré.

**Dans ce mode** de réalisation, le serveur DEST obtient, au cours de l'étape D270, la durée D de délégation du préfixe de taille T. Le serveur DEST associe alors une durée de vie à son action. Cette durée de vie est calculée sur la base de la durée D d'allocation de la ressource IP. Par exemple, si le préfixe est alloué pour 24 heures, le serveur DEST met un terme à son action à l'issue de l'expiration des 24 heures.

Associer une durée de vie à une action permet de rationaliser la gestion des filtres installés par le serveur DEST et d'éviter ainsi que l'accès au service ne soit restreint pour une autre machine à l'expiration de cette durée de vie.

Dans ce mode de réalisation, le système IP_REP_NET est informé, au cours de l'étape R250, que l'équipement TRM possède une ressource IP au sein du premier système autonome AS1.

Au cours d'une étape R280, le système de réputation du réseau IP_REP_NET envoie un message de notification NOTIF au serveur IP_REP_AS1 de réputation du système AS1 pour l'informer qu'une action a été effectuée à l'encontre d'un préfixe alloué par l'opérateur OP1.

Dans ce mode de réalisation, le message de notification NOTIF comporte les informations suivantes :
- un code CODE correspondant à une action exécutée par le système de réputation IP_REP_NET lors de la mise à jour de sa base de données au cours de l'étape R250, par exemple :
   ∘ 0 : Ajout à une liste noire
   ∘ 1 : Retrait d'une liste noire
   ∘ 2 : Retrait d'une liste blanche
   ∘ 3 : Ajout à une liste blanche
   ∘ 4 : Limitation de débit « Rate-limit »
- la ressource IP concernée par l'action.
- la raison R_CODE de l'action, par exemple:
   ∘ 0 : déni de service
   ∘ 1 : SPAM
   ∘ 2 : machine infectée par un virus
   ∘ 3 : présence dans une base de données d'un autre système de réputation

D'autres informations, comme l'horodatage de l'allocation de l'adresse IP à l'équipement TRM, peuvent être communiquées. L'horodatage communiqué dans le message de notification NOTIF permet au système AS1 de déterminer le client TRM qui a été à l'origine de l'action illicite.

Le serveur IP_REP_AS1 reçoit le message de notification NOTIF au cours d'une étape R_AS290. Dans ce mode de réalisation, le serveur de réputation IP_REP_AS1 de l'opérateur OP1 reçoit le message de notification directement de la part du système de réputation IP_REP_NET du réseau.

L'opérateur OP1 est alors informé d'une manière dynamique que la ressource IP de l'équipement TRM a subi au moins une action (A1, A2) relative à sa réputation.

Le serveur IP_REP_AS1 est donc informé qu'un bloc d'adresses IP associées au sein du système AS1, est filtré, et peut alors réagir à cette action.

Au cours de l'étape R_AS290, le serveur IP_REP_AS1 identifie l'équipement TRM. L'identification de l'équipement TRM (en cas de connexion directe de l'équipement TRM au réseau AS1) ou d'un équipement réseau associé à l'équipement TRM (en cas de connexion de l'équipement TRM au réseau AS1 via un équipement intermédiaire tel qu'un CPE ou une STB) peut se faire en collaboration avec d'autres modules fonctionnels du système AS1. Cette identification résulte en l'obtention d'une information représentative de la taille T du préfixe de l'adresse IP affectée au terminal TRM au sein du réseau AS1.

Au cours d'une étape R_AS300, le serveur IP_REP_AS1 exécute, selon une politique de réputation, une action A3(T) définie en fonction de la taille T. Cette action A3 peut consister à :
- éviter d'allouer la ressource IP ou le préfixe inclus dans le message de notification NOTIF à un nouveau client ;
- rediriger le trafic de l'équipement TRM concerné vers une plateforme anti-virus ;
- rediriger le trafic de l'équipement TRM concerné vers une plateforme de détection et de mitigation d'attaques de déni de service ;
- restreindre l'accès de l'équipement TRM au service du système AS1; et/ou
- solliciter une plateforme de supervision pour vérifier si des communications ont été émises vers le serveur DEST depuis la ressource IP concernée.

Grâce à l'invention, l'opérateur OP1 est en mesure d'anticiper une dégradation de service en évitant d'allouer une adresse IP dont le préfixe est filtré, à un nouvel équipement qui se connecte au réseau NET.

En fonction du résultat de l'action A3 exécutée par le système autonome AS1, le serveur IP_REP_AS1 entreprend automatiquement une phase de négociation avec le système de réputation IP_REP_NET pour indiquer que la ressource IP, ayant été filtrée, ne représente plus de menaces et que des mesures ont été appliquées localement pour se conformer à la charte du serveur distant DEST.

Au cours d'une étape R_AS310, le serveur IP_REP_AS1 de l'opérateur OP1 envoie au serveur de réputation du réseau IP_REP_NET un message de demande d'annulation de l'effet de l'action A1 exécutée par le système IP_REP_NET, par exemple une demande de suppression du préfixe de taille T de la liste noire, qui était attribué à l'équipement TRM, pour éviter une expérience dégradée ou un empêchement d'accès à un service par une machine ayant le même préfixe que l'équipement TRM.

Dans ce mode de réalisation, le message envoyé au cours de l'étape R_AS310 comprend les informations suivantes :
- **un identifiant** ID d'une transaction établie entre le système de réputation IP_REP_NET et le serveur IP_REP_AS1, cet identifiant est utilisé par AS1 pour identifier la demande correspondante de manière non ambiguë ;
- un code correspondant à la demande exprimée auprès du système de réputation IP_REP_NET, par exemple :
   ∘ 0 : demande de retrait d'une liste noire,
   ∘ 1 demande d'ajout à une liste blanche, ou
   ∘ 2 : demande de suppression de tout conditionnement du trafic associé à cette ressource ;
- la ressource IP concernée par la demande. Cette ressource IP peut être un préfixe ou une adresse IP ; et
- une justification de la demande, par exemple :
   ∘ 0 : action de mitigation de déni de service mise en place,
   ∘ 1 : action anti-SPAM mise en place,
   ∘ 2 : action de filtrage anti-virus mise en place, ou
   ∘ 4 : contestation de l'action décrite dans un message de notification NOTIF.

Le système de réputation du réseau IP_REP_NET reçoit cette demande au cours d'une étape R320.

Dans ce mode de réalisation, le système de réputation IP_REP_NET décide, au cours d'une étape R330, d'accepter la demande émise par le système AS1. Il annule alors l'effet de son action A1 en mettant à jour sa base de données, par exemple en supprimant d'une liste noire, ou en ajoutant à une liste blanche, la ressource IP ayant été attribuée à l'équipement TRM.

Dans ce mode de réalisation, le système de réputation du réseau IP_REP_NET s'appuie sur un mécanisme de vérification de l'authenticité des messages reçus, pour vérifier si un AS est légitime à émettre des actions, par exemple un mécanisme de type RPKI (pour « Resource Public Key Infrastructure » en anglais).

Le système IP_REP_NET informe le serveur DEST de cette mise à jour et lui envoie, au cours d'une étape R340, une requête pour annuler l'effet de l'action A2 exécutée par le serveur DEST. Le serveur DEST reçoit cette requête au cours d'une étape D345 et annule l'effet de l'action A2 au cours d'une étape D350. A noter que l'information de mise à jour (R340) peut être récupérée sur demande du serveur DEST.

Le mode de réalisation présenté à la figure 2 est particulièrement intéressant dans un réseau utilisant un adressage IPv6 et/ou un adressage IPv4 avec un masque de sous-réseau de taille variable VLSM (pour « Variable-Length Subnet Mask » en anglais).

Ce mode de réalisation où le protocole BGPSEC est utilisé comme vecteur d'annonce des attributs de taille T, de durée D et d'identifiant « IP_REP_AS1 » tire avantageusement parti des fonctions d'authentification et de vérification d'intégrité offertes par BGPSEC.

### Mise en œuvre des procédés de l'invention dans un réseau BGP

Dans un mode de réalisation, le procédé d'envoi d'une information et le procédé de réception d'une information sont mis en œuvre dans un réseau utilisant le protocole BGP.

Dans ce mode de réalisation, les premier et deuxième réseaux AS1 et AS2 sont des systèmes autonomes.

Le protocole BGP est utilisé dans un réseau NET pour annoncer des routes entre les différents systèmes autonomes AS1 et AS2.

Le routeur rAS1 ajoute dans l'attribut AS_PATH la taille T de préfixe d'un groupe d'adresses IP allouées au sein du système autonome AS1.

Dans un mode de réalisation, le routeur rAS1 ajoute aussi à l'attribut AS_PATH la durée D d'allocation de préfixe de taille T et/ou l'identifiant du serveur de réputation de ressources IP du système autonome AS1, IP_REP_AS1.

Les procédés de l'invention comportent les mêmes étapes décrites précédemment dans le cas de la mise en œuvre de ces procédés dans un réseau activant le protocole BGPSEC, à l'exception de l'ajout des attributs de type BGPSEC_PATH et de leurs signatures.

### Mise en œuvre des procédés de l'invention dans un réseau apte à mettre en œuvre des communications TCP

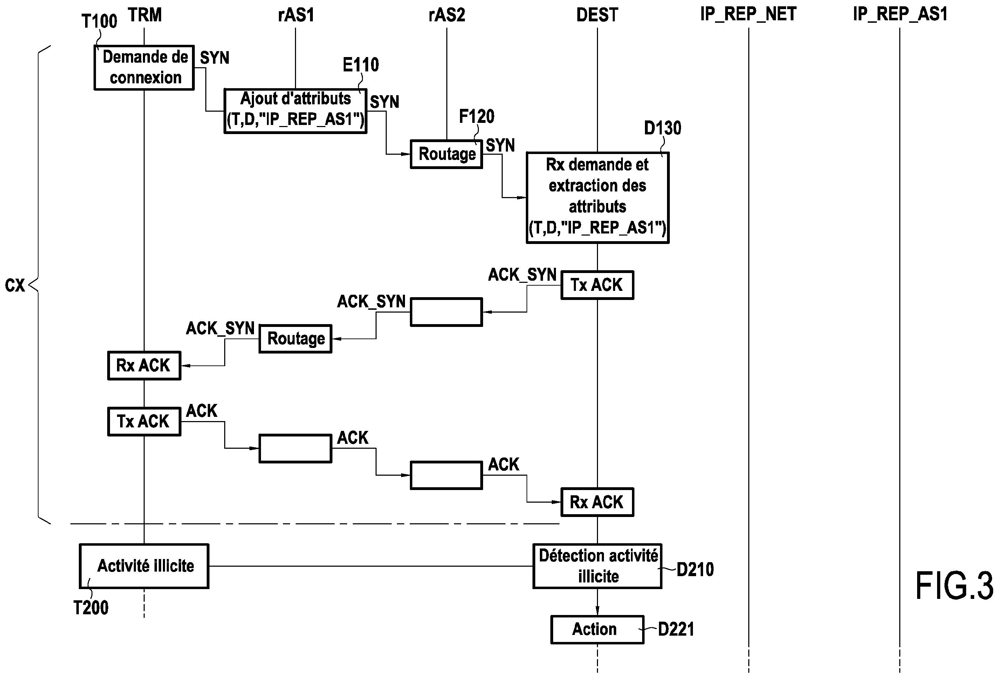

**La** **figure 3** est un chronogramme représentant des étapes du procédé d'envoi d'une information et du procédé de réception d'une information, mis en œuvre dans un réseau apte à mettre en œuvre des communications TCP (pour « Transmission Control Protocol » en anglais) et conformes à un mode de réalisation de l'invention.

Le procédé d'envoi d'une information est mis en œuvre par le routeur rAS1, en référence à l'étape E110 décrite ultérieurement.

Le procédé de réception d'une information est mis en œuvre par le serveur de contenu DEST, en référence à l'étape D221 décrite ultérieurement et à l'étape D270 telle que décrite pour la mise en œuvre du procédé dans un réseau activant le protocole BGPSEC.

Le procédé de réception d'une information est mis en œuvre par au moins un serveur du système de réputation réseau IP_REP_NET, en référence aux étapes R250, R320 et R330 telles que décrites pour la mise en œuvre du procédé dans un réseau activant le protocole BGPSEC.

Le procédé de réception d'une information est mis en œuvre par le serveur IP_REP_AS1 de réputation IP du premier réseau AS1, en référence aux étapes R_AS290 et R_AS300 telles que décrites pour la mise en œuvre du procédé dans un réseau activant le protocole BGPSEC.

Sur la figure 3, on a représenté différentes étapes mises en œuvre dans cet exemple par l'équipement TRM, le routeur rAS1, le routeur rAS2, le serveur DEST, un serveur du système de réputation réseau IP_REP_NET et le serveur IP_REP_AS1 de réputation de ressources IP du premier réseau AS1.

Dans ce mode de réalisation, l'utilisateur de l'équipement TRM veut accéder au contenu du serveur DEST. Pour cela, une connexion TCP doit être établie entre l'équipement TRM et le serveur DEST. Selon la table de routage TRG, la route entre l'équipement TRM et le serveur DEST passe par les routeurs rAS1 et rAS2.

Au cours d'une phase CX d'établissement de connexion TCP et au cours d'une étape T100, l'équipement TRM envoie une demande d'établissement de connexion sous forme d'un paquet de type SYN (demande de synchronisation) à destination du serveur DEST.

Au cours d'une étape E110 et conformément au procédé d'identification selon l'invention, le routeur rAS1 intercepte le message de type SYN, ajoute au message SYN un indicatif qui indique la taille T du préfixe de l'adresse IP affectée à l'équipement TRM connecté au premier réseau AS1, et envoie le message SYN modifié au serveur DEST via le routeur rAS2 comme indiqué par la table de routage TRG.

Dans ce mode de réalisation, au cours de l'étape E110, le routeur rAS1 ajoute aussi, au message SYN, un indicatif qui représente une durée D d'attribution du préfixe de taille T.

Dans ce mode de réalisation, au cours de l'étape E110, le routeur rAS1 ajoute aussi, au message SYN, un indicatif qui représente un identifiant du serveur de réputation IP_REP_AS1.

Au cours d'une étape F120, le routeur rAS2 reçoit le paquet SYN et l'achemine vers sa destination, le serveur DEST.

Au cours d'une étape D130, le serveur DEST reçoit le message SYN et extrait l'information sur la taille T du préfixe de l'adresse IP affectée à l'équipement TRM, la durée D d'allocation du préfixe et l'identifiant du serveur IP_REP_AS1. Optionnellement, le serveur DEST communique les informations d'identification reçues dans un message TCP à un système de réputation IP_REP_NET qui alimentera ensuite sa table de gestion de réputation TRG.

La phase d'établissement de connexion TCP se poursuit par un envoi d'un message ACK/SYN du serveur DEST à destination de l'équipement TRM pour accepter la demande de synchronisation, et par un envoi d'un message ACK de l'équipement TRM vers le serveur DEST pour terminer la phase de contrôle et finaliser l'établissement de la connexion TCP. Les étapes relatives aux échanges des messages ACK/SYN et ACK de la phase CX d'établissement de connexion TCP sont connues de l'état de l'art et non décrites ici en détail.

On suppose que l'équipement TRM exerce une activité illicite au cours d'une étape T200 et que le serveur de contenu DEST détecte cette activité illicite au cours d'une étape D210.

Au cours d'une étape D221, le serveur de contenu DEST définit en fonction de la taille T une action à l'encontre de l'équipement TRM et l'exécute.

L'étape D221 est suivie des étapes D230 à D350, telles que décrites précédemment en référence à la mise en œuvre des procédés de l'invention dans un réseau activant le protocole BGPSEC.

Le mode de réalisation présenté à la figure 3 est particulièrement intéressant dans un réseau utilisant un adressage IPv6 et/ou un adressage IPv4 utilisant un masque de sous-réseau de taille variable VLSM.

Ce mode de réalisation présenté à la figure 3, où l'étape E110 du procédé se déroule au cours de la phase d'établissement de connexion, est particulièrement intéressant vu qu'il permet au deuxième réseau AS2, dès l'initialisation de la connexion, d'obtenir la taille T du préfixe alloué au sein du premier réseau AS1 et d'informer au plus vite le système de réputation de ressources IP IP_REP_NET à propos d'une éventuelle activité illicite.

### Mise en œuvre des procédés de l'invention dans un réseau IP exploitant un en-tête d'extension spécifique

Dans un mode de réalisation, le procédé d'envoi d'une information et le procédé de réception d'une information sont mis en œuvre dans un réseau utilisant le protocole IP.

Le procédé d'envoi d'une information est mis en œuvre par le routeur rAS1 ou par l'équipement TRM.

Dans ce mode de réalisation et conformément au procédé d'envoi d'une information selon l'invention, l'équipement TRM ou le routeur rAS1 ajoute aux paquets IP émis par l'équipement TRM un attribut représentant la taille T de préfixe de l'adresse IP source de l'équipement TRM allouée au sein du premier réseau AS1, avant que ces paquets IP ne quittent le premier réseau AS1.

L'ajout de l'attribut supplémentaire, représentant la taille T du préfixe, est consigné dans un en-tête d'extension spécifique **EH** (pour « Extended Header » en anglais) dans le cas du protocole IPv6. Cette information peut être consignée dans le champ Options d'un en-tête de paquet IPv4.

Dans ce mode de réalisation, l'équipement TRM ou le routeur rAS1 ajoute d'autres attributs supplémentaires aux paquets émis par l'équipement TRM représentant par exemple la durée D d'allocation du préfixe, et/ou un identifiant du serveur IP_REP_AS1 de réputation de ressources IP du premier réseau AS1.

Cette étape d'envoi de la taille T du préfixe selon le procédé permettant l'identification, peut être suivie par des étapes T200 à D350 similaires aux étapes T200 à D350 de la mise en œuvre des procédés de l'invention dans un réseau supportant des connexions TCP.

Le procédé de réception d'une information est mis en œuvre par le serveur de contenu DEST, en référence aux étapes D221 et D270 telles que décrites pour la mise en œuvre du procédé dans un réseau supportant des connexions TCP.

Le procédé de réception d'une information est mis en œuvre par le serveur de réputation réseau IP_REP_NET, en référence aux étapes R250, R320 et R330 telles que décrites pour la mise en œuvre du procédé dans un réseau supportant des connexions TCP (ou BGPSEC).

Le procédé de réception d'une information est mis en œuvre par le serveur IP_REP_AS1 de réputation IP du premier réseau AS1, en référence aux étapes R_AS290 et R_AS300 telles que décrites pour la mise en œuvre du procédé dans un réseau apte à mettre en œuvre des connexions TCP (ou BGPSEC).

Les avantages des procédés mis en œuvre dans un réseau déployant le protocole IPv6 capable d'exploiter l'entête d'extension spécifique évoqué précédemment, sont identiques aux avantages de leur mise en œuvre dans un réseau activant le protocole BGPSEC, tel que décrit précédemment.

### Autres modes de réalisation

Dans un mode de réalisation, un équipement réseau DEST est connecté au réseau NET via un troisième réseau AS3. L'équipement DEST possède alors une adresse IP source attribuée par un opérateur OP3. Le système de réputation et le serveur DEST ne sont pas connectés aux mêmes AS.

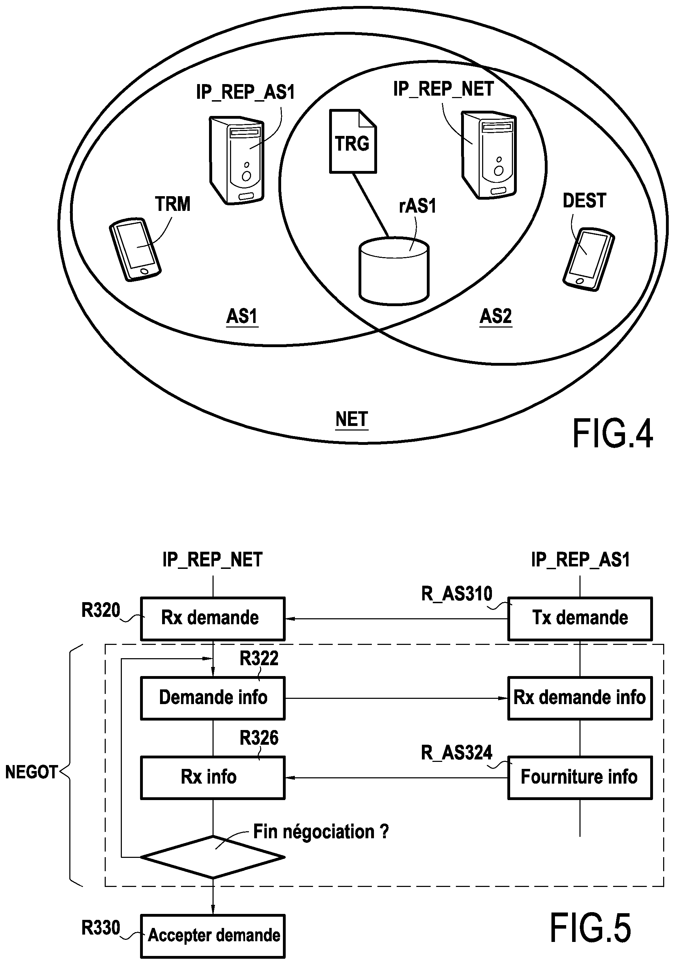

Dans un mode de réalisation, les premier et deuxième réseaux AS1 et AS2 sont directement connectés et partagent un même routeur rAS1 (ou rAS2). La **figure 4** illustre un réseau NET2 selon ce mode de réalisation de l'invention.

Dans un mode de réalisation, le serveur IP_REP_AS1 de réputation du premier réseau AS1 est un module du routeur rAS1.

Dans un mode de réalisation, un serveur du système de réputation IP_REP_NET est le même équipement réseau qui héberge la table de routage globale TRG.

Dans un mode de réalisation, l'ensemble NET des premier et deuxième réseaux AS1 et AS2 comporte plusieurs systèmes de réputation de ressources IP.

Dans un mode de réalisation, le premier réseau AS1 a plusieurs serveurs de réputation IP_REP_AS1. Ces plusieurs serveurs de réputation IP_REP_AS1 sont renseignés au cours de l'étape E010 ou de l'étape E110.

Dans un mode de réalisation, le serveur de réputation IP_REP_AS1 du premier réseau AS1 a plusieurs identifiants. Ces identifiants sont inclus dans l'attribut « IP_REP_AS1 » envoyé au cours de l'étape E010 ou de l'étape E110.

Dans un mode de réalisation, le serveur de contenu DEST et un système de réputation du réseau IP_REP_NET sont co-localisés.

Dans un mode de réalisation, le serveur de contenu DEST est localisé dans un réseau autre que le deuxième réseau.

Dans un mode de réalisation, les informations de taille T de préfixe, de durée D de délégation de ressources IP, et d'identifiant du serveur IP_REP_AS1 de réputation de ressources IP sont maintenues dans une table dédiée autre que la table de routage globale TRG.

Dans un mode de réalisation, la table de routage TRG est maintenue par des systèmes dédiés autres que les routeurs de frontière rAS1 et rAS2.

Dans un mode de réalisation de mise en œuvre des procédés de l'invention dans un réseau apte à mettre en œuvre des connexions TCP, le routeur rAS1 intercepte un paquet envoyé par l'équipement TRM à destination du serveur DEST, autre que le paquet de type SYN, dans une étape ultérieure à la phase CX d'établissement de connexion.

Dans un mode de réalisation, le premier réseau AS1 dispose de plusieurs préfixes. Il émet autant de messages UPDATE selon le protocole BGP ou BGPSEC, chacun incluant un seul NLRI. Chacun des préfixes peut être associé à des valeurs spécifiques de taille T de préfixe, de durée D d'allocation de préfixe et d'identifiant d'un serveur de réputation IP_REP_AS. Ces valeurs peuvent être différentes ou identiques pour tous les préfixes.

Dans un mode de réalisation, avant que le serveur de contenu DEST ne fournisse un service à l'équipement TRM, le serveur DEST consulte la base de données du système de réputation de ressources IP IP_REP_NET pour vérifier la réputation de cette adresse. Si cette adresse figure dans une liste noire, le serveur de contenu DEST peut refuser de servir l'équipement TRM ou procéder à des contrôles supplémentaires pour vérifier que l'équipement TRM n'est pas un rebot ou d'une machine infectée.

Dans un autre mode de réalisation relatif à l'application des procédés de l'invention dans un réseau apte à mettre en œuvre des communications TCP, l'insertion des informations d'identification, telles que la taille, la durée de validité, l'identifiant du serveur de réputation, ne se fait pas systématiquement pour l'ensemble des communications vers un même serveur DEST. Ce mode suppose que le serveur DEST met en cache l'information reçue dans un premier message SYN pendant la durée de validité indiquée dans ce premier message.

Dans un mode de réalisation, suite à la détection (étape D210), par le serveur de contenu DEST, d'une activité illicite, le serveur DEST informe directement le système de réputation IP_REP_NET (étape D230) sans exécuter la moindre action (sans l'étape D220 ou D221).

Dans les modes de réalisation présentés aux figures 2 et 3, c'est le serveur de contenu DEST qui détecte une activité illicite et reporte cette détection. Dans un autre mode de réalisation, un équipement terminal détecte une activité illicite et la déclare au système de réputation de ressources IP du réseau.

Dans un mode de réalisation, suite à la réception (étape R240) d'une information sur une activité illicite générée par l'équipement TRM, un serveur du système de réputation IP_REP_NET exécute une action préalable pendant que la phase (étape R250) de recherche des informations supplémentaires est en cours. Cette action est éventuellement mise à jour, à la fin de l'étape R250, quand la recherche d'informations supplémentaires est terminée.

Dans un mode de réalisation, au moins une action parmi l'action A2 définie par le serveur de contenu DEST et l'action A1 définie par un serveur du système de réputation IP_REP_NET dépend de l'identité du premier réseau AS1 au sein duquel l'adresse IP source d'une activité illicite a été allouée.

Dans un mode de réalisation, l'exécution de l'action A1 par un serveur du système IP_REP_NET (étape R250) est précédée par une étape de demande et une étape de réception d'au moins une information complémentaire de la part du serveur DEST. Les étapes de demande et de réception d'au moins une information complémentaire peuvent être exécutées plusieurs fois jusqu'à la fin d'une phase de négociation entre le serveur du système IP_REP_NET et le serveur DEST, d'une façon similaire à la phase de négociation NEGOT décrite ultérieurement en référence à la figure 5.

Dans un mode de réalisation, le serveur de réputation IP_REP_AS1 du système autonome AS1 reçoit le message de notification NOTIF (étape R_AS290) de la part du système de réputation IP_REP_NET du réseau via des serveurs de réputation de réseaux intermédiaires.

Les échanges entre le système IP_REP_NET et le serveur IP_REP_AS1 ne sont pas directs dans le cas où les annonces de type UPDATE ont été agrégées par des réseaux intermédiaires. Lorsque l'agrégation des annonces UPDATE est activée, un réseau intermédiaire ASi renseigne un identifiant de son propre serveur de réputation IP_REP_ASi comme étant le point de contact pour le préfixe agrégé. Cependant, un réseau intermédiaire ASi doit garder en mémoire l'information de l'identifiant du serveur IP_REP_AS1 telle que reçue du réseau source AS1.

Lorsqu'un serveur intermédiaire IP_REP_ASi reçoit un message de notification NOTIF, il consulte sa table de routage locale et relaie le message vers le serveur IP_REP_AS1 responsable de la ressource IP contenue dans le message de notification NOTIF. Cette opération est réitérée jusqu'à réception du message de notification par le premier réseau AS1 propriétaire de la ressource concernée.

Dans un autre mode de réalisation, le message de notification NOTIF n'est transmis que sur consultation, par le serveur IP_REP_AS1, du système IP_REP_NET.

Dans un autre mode de réalisation, l'étape R340 de transmission d'information du système de réputation IP_REP_NET au serveur de contenu DEST, ne s'exécute que sur consultation, par le serveur DEST, du système de réputation IP_REP_NET.

Dans un mode de réalisation, illustré par la **figure 5****,** lorsque le système de réputation du réseau IP_REP_NET reçoit (au cours de l'étape R320) une demande de modification du contenu de sa base de données de la part du système de réputation IP_REP_AS1, le système IP_REP_NET demande plus d'informations au serveur IP_REP_AS1. A cet effet, il lui envoie, au cours d'une étape R322, un message comportant par exemple :
- l'identifiant ID de la transaction établie entre le système de réputation IP_REP_NET et le serveur IP_REP_AS1, tel qu'envoyé dans la demande ; et
- une liste des informations manquantes qui permettront au système de réputation IP_REP_NET d'accepter la requête.

A la réception de ce message par le serveur de réputation IP_REP_AS1, ce dernier IP_REP_AS1 répond, au cours d'une étape R_AS324, avec un message qui comporte les arguments suivants :
- l'identifiant ID de la transaction, identique à l'identifiant de la demande ; et
- la liste des informations manquantes demandées par IP_REP_NET.

Le système de réputation du réseau IP_REP_NET reçoit cette réponse au cours d'une étape R326.

Un ou plusieurs envois de messages de demande/fourniture d'une information complémentaire peuvent être échangés entre le système IP_REP_NET et le serveur IP_REP_AS1 pour une ressource donnée. A l'issue de cette phase de négociation NEGOT, le système de réputation IP_REP_NET peut décider, au cours de l'étape R330, d'honorer la demande émise par le premier réseau AS1.

Ce mode de réalisation illustré par la figure 5 peut être mis en œuvre dans un réseau activant les protocoles BGP ou BGPSEC, apte à mettre en œuvre des communications IP.

Dans un mode de réalisation au cours de l'étape R330 (respectivement D350), au moins un serveur du système IP_REP_NET (le serveur DEST) modifie un effet de l'action A1 (A2) qu'il a exécutée au cours de l'étape R250 (D270). Par exemple, si l'action A1 était une restriction d'accès du terminal à un ensemble de services offerts au sein de l'ensemble des réseaux NET, l'action A1 est modifiée par une restriction à une partie réduite de cet ensemble.

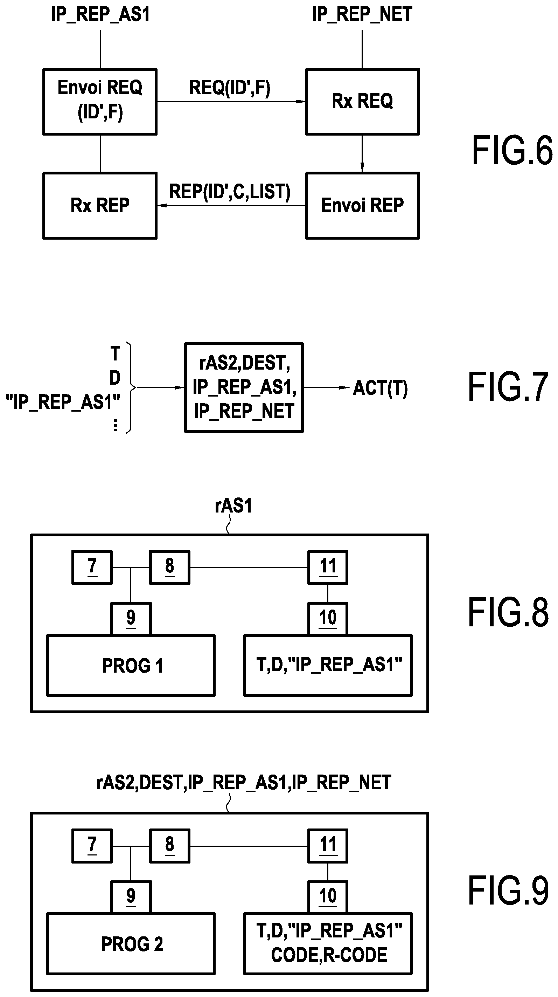

Dans un mode de réalisation, illustré par la **figure 6****,** le serveur de réputation IP_REP_AS1 du premier réseau AS1 envoie un message REQ au système de réputation IP_REP_NET pour demander de récupérer une liste de ressources d'un AS, y compris lui-même, à des fins de vérification de la cohérence ou de mise en cohérence des bases de ces serveurs.

Dans ce mode de réalisation, au moins un serveur du système de réputation IP_REP_NET met en œuvre le procédé d'envoi d'une information conforme à l'invention.

Le message REQ peut comporter :
- un identifiant ID' utilisé pour corréler la requête REQ et la réponse REP ; et
- un filtre F, par exemple une adresse IP, un préfixe, un numéro d'AS, etc.

Le système de réputation IP_REP_NET répond avec un message REP comportant :
- le même identifiant ID' utilisé pour corréler la requête REQ et la réponse REP ;
- un code C indiquant si la requête a été honorée ou a échoué, par exemple
   ∘ 0 : succès,
   ∘ 1 : non compatible,
   ∘ 2 : accès refusé, ou
   ∘ 3 : indisponible temporairement ; et
- une liste LIST de ressources associées au filtre F de la requête REQ, y compris les tailles T de préfixes IP.

Ce mode de réalisation illustré par la figure 6 peut être mis en œuvre dans un réseau activant les protocoles BGP ou BGPSEC, apte à mettre en œuvre des communications TCP ou tout autre réseau IP.

### Description du dispositif émetteur selon l'invention

Le routeur rAS1 du premier réseau AS1 est un dispositif émetteur conforme à l'invention. Ce routeur rAS1 permet d'envoyer une information représentative d'une taille de préfixe d'une adresse IP allouée au sein du premier réseau AS1 dans le réseau NET comportant le premier réseau AS1 et au moins un deuxième réseauAS2.

Le routeur rAS1 est caractérisé en ce qu'il est configuré pour envoyer, à destination d'un dispositif récepteur dudit deuxième réseau AS2, une taille T de préfixe associé à ladite adresse IP.

Dans un mode de réalisation, le premier routeur rAS1 envoie également, au dispositif récepteur, une durée D d'allocation du préfixe et un identifiant d'un serveur IP_REP_AS1 de réputation IP du premier réseau AS1.

Le routeur rAS1 met en œuvre le procédé, décrit précédemment, permettant d'identifier un premier équipement TRM.

Dans le mode de réalisation où le réseau NET est un réseau activant le protocole BGP ou le protocole BGPSEC, tels que décrits précédemment, le dispositif récepteur est un routeur rAS2 dudit au moins un deuxième réseau AS2.

Dans le mode de réalisation où le réseau NET est un réseau apte à mettre en œuvre des connexions TCP, ou un réseau IPv6 utilisant les ressources d'un en-tête d'extension EH spécifique et tels que décrits précédemment, le dispositif récepteur peut être un équipement de réseau, par exemple le serveur de contenu DEST, ou un équipement terminal connecté au deuxième réseau AS2.

### Description du dispositif récepteur selon l'invention

L'invention vise un équipement, dit « dispositif récepteur », de l'ensemble de réseaux NET. L'ensemble NET comporte le premier réseau AS1 et au moins le deuxième réseau AS2. Le dispositif récepteur permet la gestion de réputation de ressources IP du réseau NET, et est configuré pour :
- obtenir la taille T de préfixe d'une adresse IP affectée à l'équipement TRM connecté au premier réseau AS1 ; et
- exécuter une action ACT(T) en fonction de la taille T.

On notera que le terminal TRM peut être directement connecté au réseau AS1 ou via un dispositif de raccordement tel qu'un CPE ou une passerelle résidentielle.

La **figure 7** représente l'architecture fonctionnelle du dispositif récepteur.

Dans un mode de réalisation, le dispositif récepteur obtient en outre au moins une information parmi la durée D d'attribution dudit préfixe et un identifiant du serveur IP_REP_AS1 de réputation IP du premier réseau AS1.

Le dispositif récepteur peut être le deuxième routeur rAS2. Le routeur rAS2 obtient la taille T au cours de l'étape F020 lorsque l'invention est mise en œuvre dans un réseau activant les protocoles BGP ou BGPSEC. Le routeur rAS2 définit et exécute, en fonction de la taille T, une action qui est la mise à jour de la table de routage TRG.

Le dispositif récepteur peut être le serveur de contenu DEST. Le serveur DEST obtient la taille T au cours de l'étape D130 lorsque l'invention est mise en œuvre dans un réseau IP. Le serveur DEST définit et exécute au cours de l'étape D221, en fonction de la taille T, une action telle que décrite précédemment.

Le serveur DEST obtient également la taille T au cours de l'étape D270 lorsque l'invention est mise en œuvre dans un réseau activant les protocoles BGP ou BGPSEC, apte à mettre en œuvre des communications IP. Le serveur DEST définit et exécute, en fonction de la taille T, une action au cours de l'étape D270.

Le dispositif récepteur peut être le serveur IP_REP_AS1 de réputation de ressources IP du premier réseau AS1. Le serveur IP_REP_AS1 obtient la taille T au cours de l'étape R_AS290. Dans un mode de réalisation, le serveur IP_REP_AS1 obtient un code définissant une action préliminaire exécutée à l'encontre du premier équipement TRM et/ou une information d'horodatage. Le serveur IP_REP_AS1 définit et exécute, en fonction de la taille T obtenue, une action au cours de l'étape R_AS300.

Le dispositif récepteur peut être le système IP_REP_NET de réputation de ressources IP du réseau NET. Au moins un serveur du système IP_REP_NET obtient la taille T au cours de l'étape R240. Dans un mode de réalisation, au moins un serveur du système IP_REP_NET obtient un code définissant une action préliminaire exécutée à l'encontre du premier équipement TRM et/ou une information d'horodatage et/ou l'adresse IP de l'équipement TRM. Au moins un serveur du système IP_REP_NET définit et exécute, en fonction de la taille T obtenue, une action au cours de l'étape R250.

Aussi, un serveur du système IP_REP_NET obtient la taille T au cours de l'étape R320, puis définit et exécute, en fonction de la taille T obtenue, une action au cours de l'étape R330.

Dans le mode de réalisation décrit ici, le routeur rAS1 a l'architecture matérielle d'un ordinateur, telle qu'illustrée à la **figure 8****.**

L'architecture du dispositif émetteur rAS1 comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du routeur selon l'invention constitue un support d'enregistrement conforme à l'invention, lisible par le processeur 7 et sur lequel est enregistré ici un programme d'ordinateur Prog1 conforme à l'invention.

La mémoire 10 du routeur rAS1 permet d'enregistrer des variables utilisées pour l'exécution des étapes du procédé d'identification d'un premier équipement TRM selon l'invention, telles que la taille T d'un préfixe, la durée D d'allocation d'une ressource IP, et un identifiant du serveur IP_REP_AS1.

Le programme d'ordinateur Prog1 définit des modules fonctionnels et logiciels ici, configurés pour permettre d'identifier un premier équipement TRM. Ces modules fonctionnels s'appuient sur et/ou commandent les éléments matériels 7-11 du routeur rAS1 cités précédemment.

Dans le mode de réalisation décrit ici, le dispositif récepteur conforme à l'invention a chacun l'architecture matérielle d'un ordinateur, telle qu'illustrée à la **figure 9****.** Le dispositif récepteur peut être le deuxième routeur rAS2, un serveur du système de réputation du réseau, IP_REP_NET, ou le serveur de réputation du premier réseau IP_REP_AS1.

L'architecture du dispositif récepteur comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du dispositif récepteur selon l'invention constitue un support d'enregistrement conforme à l'invention, lisible par le processeur 7 et sur lequel est enregistré ici un programme d'ordinateur Prog2 conforme à l'invention.

La mémoire 10 du dispositif récepteur permet d'enregistrer des variables utilisées pour l'exécution des étapes du procédé de réception d'une information selon l'invention, telles que la taille T d'un préfixe, la durée D d'allocation d'une ressource IP, une base de données de réputation IP, le code CODE d'une action, la raison R_CODE d'une action, etc.

Le programme d'ordinateur Prog2 définit des modules fonctionnels et logiciels ici, configurés pour permettre la gestion de réputation IP dans un réseau. Ces modules fonctionnels s'appuient sur et/ou commandent les éléments matériels 7-11 du dispositif récepteur cités précédemment.

## Revendications

1. Procédé d'envoi d'une information dans un ensemble de réseaux (NET) mettant en œuvre une gestion de réputation de ressources IP et comprenant au moins un premier réseau (AS1) et un deuxième réseau (AS2), ledit procédé étant mis en œuvre par un dispositif (rAS1) dudit premier réseau (AS1), dit « dispositif émetteur » (rAS1), et **caractérisé en ce qu'**il comporte une étape d'envoi (E010, E110), par ledit dispositif émetteur (rAS1) à destination d'un dispositif (DEST, rAS2) dudit deuxième réseau (AS2), dit « dispositif récepteur » (DEST, rAS2), d'une information représentative d'une taille (T) d'un second préfixe extrait d'un premier préfixe d'adresses IP allouées au premier réseau (AS1), le second préfixe ayant été délégué à au moins un équipement (TRM) connecté audit premier réseau (AS1), ledit au moins un équipement étant identifié par une adresse IP dérivée de ce second préfixe.

2. Procédé selon la revendication 1 comportant en outre une étape d'envoi (E010, E110), par ledit dispositif émetteur (rAS1) à destination du dispositif récepteur (DEST, rAS2), d'une information représentative d'une durée (D) d'attribution dudit second préfixe.

3. Procédé selon l'une quelconque des revendications 1 à 2 comportant en outre une étape d'envoi (E010, E110), par ledit dispositif émetteur (rAS1) à destination du dispositif récepteur (DEST, rAS2), d'une information représentative d'un identifiant d'un serveur de réputation de ressources IP (IP_REP_AS1) dudit premier réseau (AS1), ledit serveur (IP_REP_AS1) étant configuré pour gérer au moins une liste de ressources IP associées à des équipements connectés au premier réseau (AS1).

4. Procédé selon l'une quelconque des revendications 1 à 3 dans lequel lesdits dispositifs émetteur et récepteur sont des routeurs (rAS1, rAS2) communiquant selon l'un des protocoles BGP ou BGPSEC et construisant une table (TRG) comportant au moins une information représentative de ladite taille (T) du second préfixe.

5. Procédé de réception, en provenance d'un dispositif émetteur (rAS1), d'une information dans un ensemble de réseaux (NET) mettant en œuvre une gestion de réputation de ressources IP et comprenant au moins un premier réseau (AS1) et un deuxième réseau (AS2), ledit procédé étant mis en œuvre par un dispositif dudit ensemble de réseaux (NET), dit « dispositif récepteur » (rAS2, DEST, IP_REP_AS1, IP_REP_NET) et **caractérisé en ce qu'**il comporte les étapes de :
- obtention (F020, D130, D270, R_AS290, R240) d'une information représentative d'une taille (T) d'un second préfixe extrait d'un premier préfixe d'adresses IP allouées au premier réseau (AS1), le second préfixe ayant été délégué à au moins équipement (TRM) connecté audit premier réseau (AS1), ledit au moins un équipement (TRM) étant identifié par une adresse IP dérivée de ce second préfixe, ladite adresse IP étant de type IPv6 ou de type IPv4 avec un masque de sous-réseau de taille variable; et
- exécution (F020, D221, D270, R_AS300, R250) d'une action définie en fonction de ladite taille (T).

6. Procédé selon la revendication 5 dans lequel ladite action est au moins une action parmi :
- un ajout d'une ressource IP associée audit équipement (TRM) à une liste noire ou à une liste blanche, ladite ressource IP étant ledit préfixe ou ladite adresse IP ;
- un retrait de la ressource IP associée audit équipement (TRM) d'une liste noire ou d'une liste blanche ;
- une limitation de trafic échangé avec ledit équipement (TRM) ;
- une redirection des communications impliquant la ressource IP associée audit équipement (TRM) vers un portail dédié ; et
- une mise à jour d'une table (TRG) de routage ou de réputation de ressources IP.

7. Procédé selon l'une quelconque des revendications 5 à 6 comprenant en outre, suite à l'étape (R250, D270) d'exécution d'une action (A1, A2), une étape (R330, D350) d'annulation de l'effet de ladite action (A1, A2), cette étape (R330, D350) étant déclenchée sur expiration d'une durée de vie de ladite action ou sur réception (R320, D345) d'une requête (R_AS310, R340) de la part d'un dispositif (IP_REP_AS1, IP_REP_NET) configuré pour une gestion de réputation de ressources IP.

8. Procédé selon la revendication 7 dans lequel l'étape (R330) d'annulation d'un effet de ladite action (A1) est précédée par des étapes de demande (R322) et de réception (R326) d'au moins une information complémentaire de la part dudit dispositif (IP_REP_AS1) configuré pour une gestion de réputation de ressources IP.

9. Procédé selon l'une quelconque des revendications 5 à 8 dans lequel ledit dispositif récepteur (rAS2, DEST, IP_REP_AS1, IP_REP_NET) obtient (F020, D130, D270, R_AS290, R240, R326) en outre au moins une information parmi :
- ladite adresse IP dudit équipement (TRM) ;
- une information représentative d'une durée (D) d'attribution dudit préfixe ;
- un identifiant d'un serveur de réputation de ressources IP (IP_REP_AS1) dudit premier réseau (AS1), ledit serveur (IP_REP_AS1) étant configuré pour gérer au moins une liste de ressources IP associées à des équipements connectés audit premier réseau (AS1) et identifiées par un système (IP_REP_NET) de réputation de ressources IP dudit ensemble de réseaux (NET) ;
- un code d'identification d'une action déjà effectuée (D220, R_AS290) par un autre dispositif ;
- une raison de ladite action déjà effectuée par un autre dispositif ;
- une liste de ressources IP associées à un filtre ; et
- une information d'horodatage sur l'affectation de l'adresse IP dudit équipement (TRM).

10. Procédé selon l'une quelconque des revendications 1 à 9 dans lequel ladite information représentative de la taille (T) du second préfixe est la taille du second préfixe ou une information obtenue par un traitement effectué sur la taille du second préfixe.

11. Procédé selon l'une quelconque des revendications 1 à 10 dans lequel ladite information représentative de la taille (T) du second préfixe est distincte du second préfixe.

12. Dispositif, dit « dispositif émetteur » (rAS1), d'un premier réseau (AS1), ledit premier réseau étant capable de joindre un deuxième réseau (AS2), ledit dispositif émetteur (rAS1) étant **caractérisé en ce qu'**il est configuré pour envoyer, à destination d'un dispositif (DEST, rAS2) dudit deuxième réseau (AS2), une information représentative d'une taille (T) d'un second préfixe extrait d'un premier préfixe d'adresses IP allouées au premier réseau (AS1), le second préfixe ayant été délégué à au moins un équipement (TRM) connecté audit premier réseau (AS1), ledit au moins un équipement étant identifié par une adresse IP dérivée de ce second préfixe.

13. Dispositif (rAS2, DEST, IP_REP_AS1, IP_REP_NET) d'un ensemble de réseaux (NET), dit « dispositif récepteur », ledit ensemble de réseaux (NET) comprenant au moins un premier réseau (AS1) et un deuxième réseau (AS2), ledit dispositif récepteur (rAS2, DEST, IP_REP_AS1, IP_REP_NET) étant **caractérisé en ce qu'**il est configuré pour :
- obtenir (F020, D130, D270, R_AS290, R240), en provenance d'un dispositif émetteur (rAS1), une information représentative d'une taille (T) d'un second préfixe extrait d'un premier préfixe d'adresses IP allouées au premier réseau (AS1), le second préfixe ayant été délégué à au moins un équipement (TRM) connecté audit premier réseau (AS1), ledit au moins un équipement (TRM) étant identifié par une adresse IP dérivée de ce second préfixe, ladite adresse IP étant de type IPv6 ou de type IPv4 avec un masque de sous-réseau de taille variable ; et
- exécuter (F020, D221, D270, R_AS300, R250) une action (ACT(T)) définie en fonction de ladite taille (T).

14. Dispositif récepteur selon la revendication 13 étant un dispositif parmi :
- un équipement réseau (rAS2, DEST) dudit deuxième réseau (AS2) ;
- un serveur d'un système (IP_REP_NET) de réputation de ressources IP dudit ensemble de réseaux (NET) ; ou
- un serveur (IP_REP_AS1) de réputation de ressources IP dudit premier réseau (AS1).

## Patentansprüche

1. Verfahren zum Senden einer Information in einer Anordnung von Netzen (NET), die eine IP-Ressourcen-Reputationsverwaltung implementiert und mindestens ein erstes Netz (AS1) und ein zweites Netz (AS2) aufweist, wobei das Verfahren von einer Vorrichtung (rAS1) des ersten Netzes (AS1), "sendende Vorrichtung" (rAS1) genannt, implementiert wird und **dadurch gekennzeichnet ist, dass** es einen Schritt des Sendens (E010, E110), durch die sendende Vorrichtung (rAS1) an eine Vorrichtung (DEST, rAS2) des zweiten Netzes (AS2), "empfangende Vorrichtung" (DEST, rAS2) genannt, einer Information umfasst, die für eine Größe (T) eines zweiten Präfixes repräsentativ ist, das aus einem ersten Präfix von IP-Adressen extrahiert wird, die dem ersten Netz (AS1) zugewiesen sind, wobei das zweite Präfix an mindestens eine Einrichtung (TRM) delegiert worden ist, die mit dem ersten Netz (AS1) verbunden ist, wobei die mindestens eine Einrichtung durch eine von diesem zweiten Präfix abgeleitete IP-Adresse identifiziert wird.

2. Verfahren nach Anspruch 1, umfassend ferner einen Schritt des Sendens (E010, E110), durch die sendende Vorrichtung (rAS1) an die empfangende Vorrichtung (DEST, rAS2), einer Information, die für eine Zuteilungsdauer (D) des zweiten Präfixes repräsentativ ist.

3. Verfahren nach einem der Ansprüche 1 bis 2, umfassend ferner einen Schritt des Sendens (E010, E110), durch die sendende Vorrichtung (rAS1) an die empfangende Vorrichtung (DEST, rAS2), einer Information, die für eine Kennung eines IP-Ressourcen-Reputationsservers (IP_REP_AS1) des ersten Netzes (AS1) repräsentativ ist, wobei der Server (IP_REP_AS1) dazu ausgestaltet ist, mindestens eine Liste mit IP-Ressourcen zu verwalten, die Einrichtungen zugeordnet sind, die mit dem ersten Netz (AS1) verbunden sind.

4. Verfahren nach einem der Ansprüche 1 bis 3, wobei die sendenden und empfangenden Vorrichtungen Router (rAS1, rAS2) sind, die gemäß einem der Protokolle BGP oder BGPSEC kommunizieren und eine Tabelle (TRG) erstellen, die mindestens eine Information umfasst, die für die Größe (T) des zweiten Präfixes repräsentativ ist.

5. Verfahren zum Empfangen, von einer sendenden Vorrichtung (rAS1), einer Information in einer Anordnung von Netzen (NET), die eine von IP-Ressourcen-Reputationsverwaltung implementiert und mindestens ein erstes Netz (AS1) und ein zweites Netz (AS2) umfasst, wobei das Verfahren von einer Vorrichtung der Anordnung von Netzen (NET), "empfangende Vorrichtung" (rAS2, DEST, IP_REP_AS1, IP_REP_NET) genannt, implementiert wird und **dadurch gekennzeichnet ist, dass** es die folgenden Schritte umfasst:
- Erhalten (F020, D130, D270, R_AS290, R240) einer Information, die für eine Größe (T) eines zweiten Präfixes repräsentativ ist, das aus einem ersten Präfix von IP-Adressen extrahiert wird, die dem ersten Netz (AS1) zugewiesen sind, wobei das zweite Präfix an mindestens eine Einrichtung (TRM) delegiert worden ist, die mit dem ersten Netz (AS1) verbunden ist, wobei die mindestens eine Einrichtung (TRM) durch eine IP-Adresse identifiziert wird, die von diesem zweiten Präfix abgeleitet wird, wobei die IP-Adresse vom Typ IPv6 oder vom Typ IPv4 mit einer Subnetzmaske von variabler Größe ist; und
- Ausführen (F020, D221, D270, R_AS300, R250) einer definierten Aktion in Abhängigkeit von der Größe (T).

6. Verfahren nach Anspruch 5, wobei die Aktion mindestens eine Aktion ist unter:
- einem Hinzufügen einer IP-Ressource, die der Einrichtung (TRM) zugeordnet ist, zu einer schwarzen Liste oder zu einer weißen Liste, wobei die IP-Ressource das Präfix oder die IP-Adresse ist;
- einem Entfernen der IP-Ressource, die der Einrichtung (TRM) zugeordnet ist, aus einer schwarzen Liste oder aus einer weißen Liste;
- einem Beschränken des Verkehrs, der mit der Einrichtung (TRM) ausgetauscht wird;
- einem Umleiten der Verbindungen, die die IP-Ressource beinhalten, die der Einrichtung (TRM) zugeordnet ist, zu einem dedizierten Portal; und
- einem Aktualisieren einer Routing- oder Reputationstabelle (TRG) mit IP-Ressourcen.

7. Verfahren nach einem der Ansprüche 5 bis 6, umfassend ferner, nach dem Schritt (R250, D270) des Ausführens einer Aktion (A1, A2), einen Schritt (R330, D350) des Aufhebens der Wirkung der Aktion (A1, A2), wobei dieser Schritt (R330, D350) bei Ablauf einer Lebensdauer der Aktion ausgelöst wird oder beim Empfangen (R320, D345) einer Anforderung (R_AS310, R340) seitens einer Vorrichtung (IP_REP_AS1, IP_REP_NET), die zu einer IP-Ressourcen-Reputationsverwaltung ausgestaltet ist.

8. Verfahren nach Anspruch 7, wobei dem Schritt (R330) des Aufhebens einer Wirkung der Aktion (A1) Schritte des Anforderns (R322) und Empfangens (R326) mindestens einer ergänzenden Information seitens der Vorrichtung (IP_REP_AS1), die zu einer IP-Ressourcen-Reputationsverwaltung ausgestaltet ist, vorausgehen.

9. Verfahren nach einem der Ansprüche 5 bis 8, wobei die empfangende Vorrichtung (rAS2, DEST, IP_REP_AS1, IP_REP_NET) ferner mindestens eine Information erhält (F020, D130, D270, R_AS290, R240, R326) unter:
- der IP-Adresse der Einrichtung (TRM);
- einer Information, die für eine Zuteilungsdauer (D) des Präfixes repräsentativ ist;
- einer Kennung eines IP-Ressourcen-Reputationsservers (IP_REP_AS1) des ersten Netzes (AS1), wobei der Server (IP_REP_AS1) dazu ausgestaltet ist, mindestens eine Liste mit IP-Ressourcen zu verwalten, die Einrichtungen zugeordnet sind, die mit dem ersten Netz (AS1) verbunden sind, und durch ein IP-Ressourcen-Reputationssystem (IP_REP_NET) der Anordnung von Netzen (NET) identifiziert werden;
- einem Identifikationscode einer Aktion, die bereits von einer anderen Vorrichtung ausgeführt wurde (D220, R_AS290);
- einem Grund für die Aktion, die bereits von einer anderen Vorrichtung ausgeführt wurde;
- einer Liste mit IP-Ressourcen, die einem Filter zugeordnet sind; und
- einer Zeitstempelungsinformation zur Zuweisung der IP-Adresse der Einrichtung (TRM).

10. Verfahren nach einem der Ansprüche 1 bis 9, wobei die Information, die für die Größe (T) des zweiten Präfixes repräsentativ ist, die Größe des zweiten Präfixes ist oder eine Information, die durch eine Verarbeitung erhalten wird, die an der Größe des zweiten Präfixes ausgeführt wird.

11. Verfahren nach einem der Ansprüche 1 bis 10, wobei die Information, die für die Größe (T) des zweiten Präfixes repräsentativ ist, von dem zweiten Präfix verschieden ist.

12. Vorrichtung, "sendende Vorrichtung" (rAS1) genannt, eines ersten Netzes (AS1), wobei das erste Netz in der Lage ist, mit einem zweiten Netz (AS2) gekoppelt zu werden, wobei die sendende Vorrichtung (rAS1) **dadurch gekennzeichnet ist, dass** sie dazu ausgestaltet ist, an eine Vorrichtung (DEST, rAS2) des zweiten Netzes (AS2) eine Information zu senden, die für eine Größe (T) eines zweiten Präfixes repräsentativ ist, das aus einem ersten Präfix von IP-Adressen extrahiert wird, die dem ersten Netz (AS1) zugewiesen sind, wobei das zweite Präfix an mindestens eine Einrichtung (TRM) delegiert worden ist, die mit dem ersten Netz (AS1) verbunden ist, wobei die mindestens eine Einrichtung durch eine von diesem zweiten Präfix abgeleitete IP-Adresse identifiziert wird.

13. Vorrichtung (rAS2, DEST, IP_REP_AS1, IP_REP_NET) einer Anordnung von Netzen (NET), "empfangende Vorrichtung" genannt, wobei die Anordnung von Netzen (NET) mindestens ein erstes Netz (AS1) und ein zweites Netz (AS2) umfasst, wobei die empfangende Vorrichtung (rAS2, DEST, IP_REP_AS1, IP_REP_NET) **dadurch gekennzeichnet ist, dass** sie ausgestaltet ist zum:
- Erhalten (F020, D130, D270, R_AS290, R240), von einer sendenden Vorrichtung (rAS1), einer Information, die für eine Größe (T) eines zweiten Präfixes repräsentativ ist, das aus einem ersten Präfix von IP-Adressen extrahiert wird, die dem ersten Netz (AS1) zugewiesen sind, wobei das zweite Präfix an mindestens eine Einrichtung (TRM) delegiert worden ist, die mit dem ersten Netz (AS1) verbunden ist, wobei die mindestens eine Einrichtung (TRM) durch eine von diesem zweiten Präfix abgeleitete IP-Adresse identifiziert wird, wobei die IP-Adresse vom Typ IPv6 oder vom Typ IPv4 mit einer Subnetzmaske von variabler Größe ist; und
- Ausführen (F020, D221, D270, R_AS300, R250) einer definierten Aktion (ACT(T)) in Abhängigkeit von der Größe (T).

14. Empfangende Vorrichtung nach Anspruch 13, wobei sie eine Vorrichtung ist unter:
- einer Netzeinrichtung (rAS2, DEST) des zweiten Netzes (AS2);
- einem Server eines IP-Ressourcen-Reputationssystems (IP_REP_NET) der Anordnung von Netzen (NET); oder
- einem IP-Ressourcen-Reputationsserver (IP_REP_AS1) des ersten Netzes (AS1).

## Claims

1. Method for sending information in a set of networks (NET) implementing management of IP resource reputation and comprising at least a first network (AS1) and a second network (AS2), said method being implemented by a device (rAS1) of said first network (AS1), called the "sending device" (rAS1), and **characterized in that** it comprises a step (E010, E110) of said sending device (rAS1) sending, to a device (DEST, rAS2) of said second network (AS2), called the "receiving device" (DEST, rAS2), a piece of information representative of a length (T) of a second prefix extracted from a first prefix of IP addresses allocated to the first network (AS1), the second prefix having been delegated to at least one equipment (TRM) connected to said first network (AS1), said at least one equipment being identified by an IP address derived from this second prefix.

2. Method according to Claim 1, further comprising a step (E010, E110) of said sending device (rAS1) sending, to the receiving device (DEST, rAS2), a piece of information representative of a period (D) of attribution of said second prefix.

3. Method according to either of Claims 1 and 2, further comprising a step (E010, E110) of said sending device (rAS1) sending, to the receiving device (DEST, rAS2), a piece of information representative of an identifier of an IP resource reputation server (IP_REP_AS1) of said first network (AS1), said server (IP_REP_AS1) being configured to manage at least one list of IP resources associated with equipment connected to the first network (AS1).

4. Method according to any of Claims 1 to 3, wherein said sending and receiving devices are routers (rAS1, rAS2) that communicate according to either the BGP or BGPSEC protocol and that construct a table (TRG) containing at least one piece of information representative of said length (T) of the second prefix.

5. Method for receiving, from a sending device (rAS1), information in a set of networks (NET) implementing management of IP resource reputation and comprising at least a first network (AS1) and a second network (AS2), said method being implemented by a device of said set of networks (NET), called the "receiving device" (rAS2, DEST, IP_REP_AS1, IP_REP_NET), and **characterized in that** it comprises the steps of:
- obtaining (F020, D130, D270, R_AS290, R240) a piece of information representative of a length (T) of a second prefix extracted from a first prefix of IP addresses allocated to the first network (AS1), the second prefix having been delegated to at least equipment (TRM) connected to said first network (AS1), said at least one equipment (TRM) being identified by an IP address derived from this second prefix, said IP address being of IPv6 type or of IPv4 type with a variable length subnet mask; and
- executing (F020, D221, D270, R_AS300, R250) an action defined depending on said length (T).

6. Method according to Claim 5, wherein said action is at least one action among:
- adding an IP resource associated with said equipment (TRM) to a blacklist or whitelist, said IP resource being said prefix or said IP address;
- removing the IP resource associated with said equipment (TRM) from a blacklist or whitelist;
- limiting traffic exchanged with said equipment (TRM) ;
- redirecting communications involving the IP resource associated with said equipment (TRM) to a dedicated portal; and
- updating a routing table or IP resource reputation table (TRG).

7. Method according to either of Claims 5 and 6, further comprising, following the step (R250, D270) of executing an action (A1, A2), a step (R330, D350) of cancelling the effect of said action (A1, A2), this step (R330, D350) being triggered on expiry of a lifetime of said action or on receipt (R320, D345) of a request (R_AS310, R340) from a device (IP_REP_AS1, IP_REP_NET) configured for management of IP resource reputation.

8. Method according to Claim 7, wherein the step (R330) of cancelling an effect of said action (A1) is preceded by steps of requesting (R322) and receiving (R326) at least one complementary piece of information from said device (IP_REP_AS1) configured for management of IP resource reputation.

9. Method according to any of Claims 5 to 8, wherein said receiving device (rAS2, DEST, IP_REP_AS1, IP_REP_NET) further obtains (F020, D130, D270, R_AS290, R240, R326) at least one piece of information among:
- said IP address of said equipment (TRM);
- a piece of information representative of a period (D) of attribution of said prefix;
- an identifier of an IP resource reputation server (IP_REP_AS1) of said first network (AS1), said server (IP_REP_AS1) being configured to manage at least one list of IP resources associated with equipment connected to said first network (AS1) and identified by an IP resource reputation system (IP_REP_NET) of said set of networks (NET);
- an identification code of an action already done (D220, R_AS290) by another device;
- a reason for said action already done by another device;
- a list of IP resources associated with a filter; and
- time-stamp information on the assignment of the IP address of said equipment (TRM).

10. Method according to any of Claims 1 to 9, wherein said piece of information representative of the length (T) of the second prefix is the length of the second prefix or a piece of information obtained by processing carried out on the length of the second prefix.

11. Method according to any of Claims 1 to 10, wherein said piece of information representative of the length (T) of the second prefix is distinct from the second prefix.

12. Device, called the "sending device" (rAS1), of a first network (AS1), said first network being capable of joining a second network (AS2), said sending device (rAS1) being **characterized in that** it is configured to send, to a device (DEST, rAS2) of said second network (AS2), a piece of information representative of a length (T) of a second prefix extracted from a first prefix of IP addresses allocated to the first network (AS1), the second prefix having been delegated to at least one equipment (TRM) connected to said first network (AS1), said at least one equipment being identified by an IP address derived from this second prefix.

13. Device (rAS2, DEST, IP_REP_AS1, IP_REP_NET) of a set of networks (NET), called the "receiving device", said set of networks (NET) comprising at least a first network (AS1) and a second network (AS2), said receiving device (rAS2, DEST, IP_REP_AS1, IP_REP_NET) being **characterized in that** it is configured to:
- obtain (F020, D130, D270, R_AS290, R240), from a sending device (rAS1), a piece of information representative of a length (T) of a second prefix extracted from a first prefix of IP addresses allocated to the first network (AS1), the second prefix having been delegated to at least one equipment (TRM) connected to said first network (AS1), said at least one equipment (TRM) being identified by an IP address derived from this second prefix, said IP address being of IPv6 type or of IPv4 type with a variable length subnet mask; and
- executing (F020, D221, D270, R_AS300, R250) an action (ACT(T)) defined depending on said length (T).

14. Receiving device according to Claim 13, being a device among:
- a network equipment (rAS2, DEST) of said second network (AS2);
- a server of an IP resource reputation system (IP_REP_NET) of said set of networks (NET); or
- an IP resource reputation server (IP_REP_AS1) of said first network (AS1).
